# EUROPEAN PATENT APPLICATION

(11) **EP 3 037 913 A1**
(43) Date of publication of application: **29.06.2016**
(21) Application number: 14837651.0
(22) Date of filing: 22.08.2014
(51) Int. Cl.: G06F 1/32

(54) **METHOD FOR PERFORMING POWER-SAVING MODE IN ELECTRONIC DEVICE AND ELECTRONIC DEVICE THEREFOR**

(30) Priority: 22.08.2013 KR 20130099809; 23.09.2013 KR 20130112905; 21.02.2014 KR 20140020967
(71) Applicant: Samsung Electronics Co., Ltd., Gyeonggi-do 16677 (KR)
(72) Inventor: HAN, Kyu-Jin, Suwon-si Gyeonggi-do 16677 (KR); KIM, Tae-Yun, Suwon-si Gyeonggi-do 16677 (KR); EO, Min-Sung, Suwon-si Gyeonggi-do 16677 (KR); YOON, Sang-Hyeon, Suwon-si Gyeonggi-do 16677 (KR); LEE, Young-Je, Suwon-si Gyeonggi-do 16677 (KR)
(74) Representative: Nederlandsch Octrooibureau
(86) International application number: PCT/KR2014/007828
(87) International publication number: WO 2015/026197

(57) **Abstract**

A method for performing a power-saving mode in an electronic device, according to various embodiments of the present invention, comprises: an operation for driving at least one processor; an operation for sensing a switching command to a power-saving mode; and an operation for restricting an operation of at least one processor so as to block set functions excluding a power-saving call function according to at least one power-saving method of set power-saving methods when sensing the switching command to the power-saving mode. Therefore, the driving time of the electronic device can be maximized by switching to the power-saving mode capable of minimizing battery consumption.

## Description

### Technical Field

The present disclosure relates to a method of performing a power saving mode in an electronic device, and an electronic device for the same.

### Background Art

A basic requirement for using an electronic device is a guarantee that a battery can be used for a long time. In general, the electronic device uses a chargeable battery as a power supply source and a maximum use time thereof is determined based on a single charge according to a charging capacity of the chargeable battery. However, if it is required to frequently replace the battery due to large current consumption in order to use the electronic device having various functions, it may be a great limitation on the use of the electronic device.

Accordingly, there is a method of increasing a use time through the development of technologies of the battery to increase the charging capacity of the battery. However, the method of increasing the charging capacity of the battery has a physical limit.

### Detailed Desciption of the Invention

### Technical Problem

As described above, in the conventional art, a usable time of the electronic device is determined according to the charging capacity of the battery included in the electronic device. Accordingly, the user must rely on a limited battery power to use the electronic device.

Further, as the supply of smart phones is recently generalized, the user of the smart phone may use various applications such as photos, music, videos, multimedia, games, and the like as well as a basic call function. However, the smart phone has relatively large power consumption due to execution of the applications. Accordingly, a case frequently occurs in which the user may not be able to use the smart phone since the battery power becomes equal to or lower than the battery capacity necessary for the operation of the smart phone if the user does not check a residual capacity of the battery. Further, due to the lack of the residual capacity of the battery, a case where a call is disconnected during the call with a counterpart frequently occurs.

### Technical solution

Accordingly, various embodiments of the present invention may provide a method and an apparatus for minimizing power consumption in a power saving mode.

Various embodiments of the present invention may provide a method and an apparatus for limiting at least one of functions provided by the electronic device to reduce power consumption.

Various embodiments of the present invention may provide a method and an apparatus for minimizing power consumption by limiting the use of other functions except for a basic call-related function of the electronic device or an application which is released from the use limit by the user in the power saving mode.

Various embodiments of the present invention may provide a method and an apparatus for minimizing power consumption by limiting periodic communication with a network in the power saving mode.

In accordance with an aspect of the present invention, a method of performing a power saving mode in an electronic device is provided. The method includes: driving one or more processors; detecting a command for switching to a power saving mode; and when the command for switching to the power saving mode is detected, limiting operations of the one or more processors to block set functions other than a power saving call function in accordance with at least one of set power saving schemes.

In accordance with another aspect of the present invention, an electronic device for performing a power saving mode is provided. The electronic device includes: a display unit that displays a power saving screen when a command for switching to a power saving mode is detected, the display unit being functionally connected to the electronic device; and a control unit including a call processor that controls a power saving call-related function and an application processor that controls other functions except for the power saving call-related function, wherein the control unit makes a control to limit an operation of at least one of the call processor and the application processor to block at least some of the functions except for the power saving call-related function in accordance with at least one of set power saving schemes when the command for switching to the power saving mode is detected.

### Effects of the Invention

According to various embodiments of the present invention, it is possible to maximize a driving time of the electronic device by switching to a power saving mode in which battery consumption can be minimized.

According to various embodiments of the present invention, it is possible to minimize power consumption by controlling functions having large power consumption except for a basic call-related function when the electronic device such as smart phone cannot charge a battery in an emergency situation.

According to various embodiments of the present invention, it is possible to reduce power consumption by limiting other functions except for a basic call-related function of the electronic device or an application which is released from the use limit by the user as the electronic device enters a power saving mode.

According to various embodiments of the present invention, it is possible to reduce power consumption by limiting reception/transmission of communication data through periodic communication with a network in a screen off state.

According to an embodiment of the present invention, it is possible to maximize a driving time of the electronic device by switching to a power saving mode in which battery consumption of the electronic device (for example, a smart phone or the like) can be minimized when an emergency disaster situation occurs.

According to an embodiment of the present invention, it is possible to significantly a time in which contact is possible with the outside in a dangerous situation by minimizing battery consumption of the electronic device when an emergency disaster situation occurs, thereby significantly increasing a chance of rescue and survival.

### Brief Description of the Drawings

FIG. 1 is a block diagram illustrating a detailed structure of an electronic device according to an embodiment of the present invention;
FIG. 2 is a front perspective view of the electronic device according to an embodiment of the present invention;
FIG. 3 illustrates a configuration of a power saving mode processing device according to an embodiment of the present invention;
FIG. 4 is a flowchart illustrating an operation for switching to a power saving mode of the electronic device according to various embodiments of the present invention;
FIG. 5 is a flowchart illustrating an operation in the power saving mode based on a network power saving scheme according to an embodiment of the present invention;
FIGs. 6 to 9 illustrate comparative examples of network signal processing between a normal mode and the power saving mode according to various embodiments of the present invention;
FIG. 10 is a flowchart illustrating an operation in the power saving mode based on a process power saving scheme according to an embodiment of the present invention;
FIG. 11 illustrates current consumption in the electronic device according to a power off/on state in each of the normal mode and the power saving mode according to an embodiment of the present invention;
FIG. 12 is a flowchart illustrating an operation in the power saving mode based on an application limiting power saving scheme according to an embodiment of the present invention;
FIG. 13A illustrates an example where the electronic device changes a home screen configuration according to a setting of the power saving mode according to an embodiment of the present invention;
FIG. 13B illustrates a screen example of the home screen in an emergency mode of the electronic device according to an embodiment of the present invention;
FIG. 13C is a screen example for describing a power saving mode setting scheme in the electronic device according to an embodiment of the present invention;
FIG. 14 is a flowchart illustrating an operation in the power saving mode based on a screen power saving scheme according to various embodiments of the present invention;
FIG. 15 illustrates an example for changing a display unit screen of the electronic device to be black and white according to an embodiment of the present invention;
FIG. 16 illustrates an emergency disaster message transmission system according to an embodiment of the present invention;
FIG. 17 is a block diagram illustrating a detailed structure of the electronic device according to an embodiment of the present invention;
FIG. 18 is a flowchart illustrating a mode switching process by an emergency disaster message according to an embodiment of the present invention;
FIG. 19 is a flowchart illustrating an emergency mode switching process according to an embodiment of the present invention;
FIG. 20 is a flowchart illustrating the emergency mode switching process according to another embodiment of the present invention;
FIG. 21 is a flowchart illustrating the emergency mode switching process according to another embodiment of the present invention;
FIG. 22 is a flowchart illustrating a setting process performed when switching to the emergency mode is made according to an embodiment of the present invention;
FIG. 23 is a block diagram illustrating a detailed structure of the electronic device according to an embodiment of the present invention;
FIG. 24 illustrates layers for processing a received emergency disaster message according to an embodiment of the present invention;
FIG. 25A illustrates a screen configuration for setting an emergency situation in the electronic device according to an embodiment of the present invention;
FIG. 25B illustrates a screen configuration of an emergency mode switching window in the electronic device according to an embodiment of the present invention;
FIG. 26 illustrates a screen configuration based on a setting of the emergency situation in the electronic device according to an embodiment of the present invention;
FIG. 27 illustrates an example where the electronic device changes a home screen configuration according to an emergency mode setting according to an embodiment of the present invention; and
FIG. 28 illustrates a deactivated application according to an emergency mode setting in the electronic device according to an embodiment of the present invention.

### Best Mode for Carrying out the Invention

Embodiments of the present invention will now be described more fully with reference to the accompanying drawings in which particular embodiments are shown, but the present invention may include various changes and modifications, and have various embodiments. However, it should be understood that there is no intent to limit the present invention to the particular forms disclosed, but on the contrary, the present invention is to cover all modifications, equivalents, and/or alternatives falling within the spirit and scope of the disclosure.

The terms used in this application are for the purpose of describing particular embodiments only and are not intended to be limiting of the present invention. Singular forms are intended to include plural forms unless the context clearly indicates otherwise. In this application, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms including technical and scientific terms used herein have the same meanings as those commonly understood by those skilled in the art. Such terms as those defined in a generally used dictionary are to be interpreted to have the meanings equal to the contextual meanings in the relevant field of the art, and are not to be interpreted to have ideal or excessively formal meanings unless clearly defined in this application.

In embodiments of the present invention, an electronic device may be any device having a touch screen and may be called a portable terminal, a mobile terminal, a communication terminal, a portable communication terminal, a portable mobile terminal or the like. For example, the electronic device may be a smart phone, a mobile phone, a game machine, a Television (TV), a display device, a head unit for a vehicle, a notebook computer, a laptop computer, a tablet computer, a Personal Media Player (PMP), a Personal Digital Assistant (PDA), a navigation device, an Automated Teller Machine (ATM) of a bank, a POS device of a shop or the like. Further, in the present invention, the electronic device may be a flexible device or a flexible display device.

A representative configuration of the electronic device corresponds to a configuration of a mobile phone, and some components of the representative configuration of the electronic device may be omitted or changed as necessary.

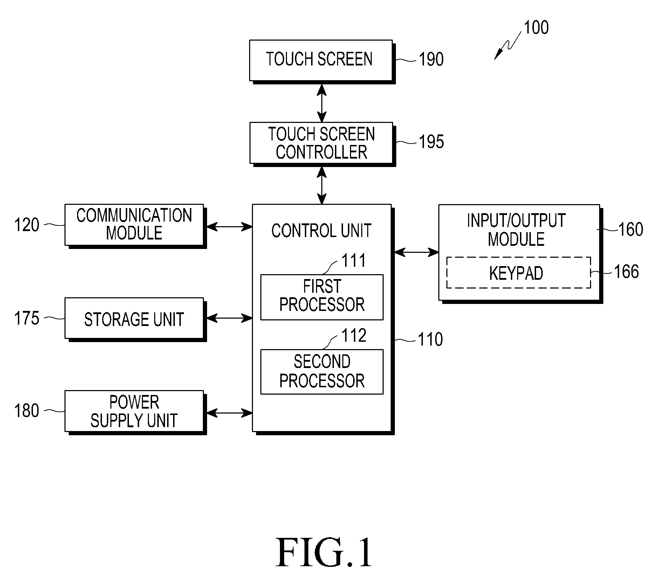

Referring to FIG. 1, an electronic device 100 includes at least one touch screen 190 and at least one touch screen controller 195. An embodiment of the present invention describes the touch screen 190 and the touch screen controller 195 as examples of a display unit and a display controller, respectively. Further, the electronic device 100 may include a control unit 110, a communication module 120, an input/output module 160, a storage unit 175, and a power supply unit 180.

First, the control unit 110 may include a bus for information communication and a processor connected to the bus for information processing. Further, a second memory (for example, Random Access Memory (RAM) connected to the bus to store information required by the processor may be included. The second memory may be used for storing temporary information required by the processor. The electronic device 100 may further include a Read Only Memory (ROM) connected to the bus to store static information required by the processor.

The control unit 110 may serve to control overall operations of the electronic device 100 as a Central Processing Unit (CPU) and to perform an operation based on a method of performing a power saving mode according to various embodiments of the present invention. The control unit 110 according to various embodiments of the present invention may operate to limit the performance of the CPU in the power saving mode. To this end, the control unit 110 may change a CPU clock speed to internally perform the power saving mode. For example, a clock speed of 1.6 GHz in the normal mode may be reduced to a clock speed of 1.2 GHz in the power saving mode. In general, as the clock speed is faster, a processing speed is faster but current consumption becomes larger. Accordingly, in the power saving mode, the current consumption can be reduced by reducing the clock speed. Further, in another example of the method of limiting the CPU performance, the control unit 110 may be changed to operate with a single core. For example, when the control unit 110 switches to the power saving mode while operating with eight cores, the control unit 110 may limit the performance by using at least one core. As described above, by limiting the CPU performance, the current consumption can be reduced.

To this end, the control unit 110 according to various embodiments of the present invention may include at least one processor. According to an embodiment of the present invention, although one processor includes a first processor 111 and a second processor 112 as an example illustrated in FIG. 1, the first processor 111 or the second processor 112 may be implemented as one integrated processor. The first processor 111 may be a Call Processor (CP) that controls the overall operations of the electronic device 100 and the second processor 112 may be an Application Processor (AP) that supports multimedia.

The first processor 111 may serve to perform a function related to a power saving call in which basic communication such as message transmission/reception is possible, and the second processor 112 may serve to perform a multimedia function to smoothly execute and control various additional functions such as a camera function, a multimedia data reproduction function, and the like.

The control unit 110 according to various embodiments of the present invention may drive both the first processor 111 and the second processor 112 in the normal mode and control an operation for executing various applications under an operating system. When a power saving mode switching condition is meet, the control unit 110 may block the driving of at least one of the first processor 111 and the second processor 112 or limit at least one operation in accordance with a power saving scheme to operate in the power saving mode in which access to some functions of the electronic device 100 is restricted.

For example, the function to which the access is restricted may be controlled to be not displayed in a power saving screen or, even if a user input such as a touch input is generated for the function of which the access is restricted, may be controlled to not execute any operation. Alternatively, the control unit 110 may disable all applications or services including applications executed in the background except for at least one application, which is allowed in the power saving mode. Here, a list of the applications, which are allowed in the power saving mode, may include a power saving call function set by default and a user may configure to add/delete applications through a setting menu.

According to various embodiments of the present invention, the power saving screen may be configured using at least one of a control of brightness of a screen of a display unit, switching of a mode of the screen of the display unit to a gray mode, switching of a home screen of the display unit to a home screen of a minimum function, and deactivation of other applications except for configured necessary applications. According to various embodiments of the present invention, when a command for switching to the power saving mode is detected, the power saving screen may be displayed on the display unit functionally connected to the electronic device.

According to various embodiments of the present invention, the control unit 110 may store information on power saving items of which the use will be omitted, to limit the use of functions related to battery consumption in the power saving mode. For example, in the power saving mode, the electronic device 100 may limit the remaining functions except for minimum functions necessary for the electronic device 100 to minimize power consumption. For example, the electronic device 100 may switch other functions except for only a power saving call function related to message reception to a disabled state. Further, the electronic device 100 may switch a screen displayed through the touch screen 190 to the power saving mode in which minimum power is consumed.

According to various embodiments of the present invention, the entry into the power saving mode may be divided into a manual type or an automatic type.

For example, in the automatic type, when an emergency message described below is received, the mode may be switched to the power saving mode according to the content contained in the received emergency message. Further, in the automatic type, when a residual amount of the battery is equal to or lower than a predetermined level, the mode is switched to the power saving mode according to a power saving mode switching condition such as a predetermined place. Accordingly, the control unit 110 may check the power saving mode switching condition and, when the condition is met, automatically switch to the power saving mode. On the contrary to this, when the condition is not met in the automatic type since charging is re-initiated in the power saving mode or a user leaves the place, the mode may be automatically switched to the normal mode.

According to various embodiments of the present invention, the emergency message which can be received by the electronic device 100 may include any type of emergency message. For example, when the user is in an emergency situation such as distress, kidnapping, or the like, the user cannot deal with the emergency situation by him/her self. Accordingly, in this case, it is required to switch the mode to an emergency mode by a designated user such as a family member or the like. To this end, according to an embodiment of the present invention, there is a method of designating a user who can transmit the emergency message to the electronic device 100 of the user and switching the mode of the electronic device 100 to the emergency mode by the designated user. As described above, when the emergency situation is registered by the designated user through, for example, a Find My Mobile (FMM) server or the like, the FMM server may transmit the emergency message to the electronic device 100. The emergency message from the FMM server may be used to find the user who is in the emergency situation through making inquiries about the location of the electronic device 100 of the user.

Further, according to various embodiments of the present invention, the emergency message may be a message provided from a predetermined service server that provides emergency information. For example, when an emergency disaster situation (for example, a typhoon, a tsunami, an earthquake or the like) occurs, the emergency disaster message may be a message provided by a Cell Broadcast message Service (CBS), an Earthquake and Tsunami Warning Service (ETWS) or the like, which provides emergency disaster information, but the present invention is not limited thereto.

According to various embodiments of the present invention, in the manual type, the mode may be switched to the power saving mode through a setting change window for the mode switching. In addition, the mode may be switched by pressing a power key of the keypad 166 for a long time, or through a button arranged on a status bar for displaying a status of the electronic device 100, a setting menu, or the like.

As described above, according to various embodiments of the present invention, it is possible to maximize a driving time of the electronic device by controlling power saving items such as functions except for the function related to data from/to the network, the display unit, and the phone call.

Further, according to various embodiments of the present invention, the power saving may be controlled in stages and, accordingly, limited operations may vary depending on each power saving stage. For example, when the user desires to execute the power saving mode and thus perform triggering, the user may control the power saving stages through the setting menu. The power saving stages may include two or more stages and operations corresponding to the stages may be defined as follows.

For example, a first power saving stage may correspond to a basic power saving mode that is basically implemented in the electronic device. A second power saving stage may further define an operation of limiting screen brightness and display the screen as black and white in addition to the limited operations corresponding to the basic power saving mode.

A third power saving stage may define an operation of limiting data exchanged in the background in addition to the limited operations of the second power saving stage, which may be referred to as a ultra power saving mode.

A fourth power saving stage may define an operation of limiting a resolution to 50% and an operation of limiting a touch area to 50% in addition to the limited operations of the third power saving stage. Here, when the resolution is reduced to be 50%, the size of a screen area displayed on the touch screen 190 is reduced in half, and the remaining area except for the half of the screen area may be processed to be black and white. For example, rather than the entire screen area occupying whole the touch screen 190, only some of the screen area may be displayed on the touch screen 190. Some of the screen area may be disposed at the center of the touch screen 190 and a location thereof is not limited thereto. Accordingly, an area which the user can touch may be limited to some of the screen area. In this case, the electronic device has only to process the touch area of 50% corresponding to the resolution, so that the application processor has a current saving effect. Although it has been described that the power saving stages include the first to fourth stages as an example, a configuration of the operations limited by the stages is not limited thereto.

According to various embodiments of the present invention, the communication module 120 may be provided for a direct connection with an external device or connection through the network, and may be a wired or a wireless communication unit. The communication module 120 may transmit data from the control unit 110, the storage unit 175, or the like through a wire or wirelessly, or receive data from the air through a wire or wirelessly and transfer the data to the control unit 110 or store the data in the storage unit 175. The communication module 120 may include at least one of a mobile communication module, a WLAN module, and a short range communication module.

According to various embodiments of the present invention, the control unit 110 may communicate with an external device through the communication module 120 or perform a task through an interworking with the external device. For example, the control unit 110 may receive an emergency disaster message from the emergency information providing server through the communication module 120, analyze the content contained in the emergency disaster message, and switch to the power saving mode.

The input/output module 160 may include at least one of a plurality of buttons, a microphone, a speaker, and a connector as well as the keypad 166. When the mode is switched to the power saving mode, a vibration output by the vibration device consumes more power compared to an output signal through the speaker, so that a ringtone of low power may be used in the power saving mode according to an embodiment of the present invention. For example, the electronic device may enter a state for low power consumption by reducing a vibration pattern or changing the vibration to the ringtone when the electronic device is in a vibration mode, or by reducing a volume of the ringtone or making the volume silent in a ringtone mode. Alternatively, the electronic device may make only an LED flash.

According to various embodiments of the present invention, the keypad 166 may receive a key input from the user to control the electronic device 100 or switch to the power saving mode. The keypad 166 includes a physical keypad (not shown) formed in the electronic device 100 or a virtual keypad (not shown) displayed on the touch screen 190. The physical keypad (not shown) formed in the electronic device 100 may be excluded according to the performance or a structure of the electronic device 100.

According to various embodiments of the present invention, the storage unit 175 may store a signal or data input/output according to an operation of the communication module 120, the input/output module 160, or the touch screen 190 under a control of the control unit 110. The storage unit 175 may store a control program for the control of the electronic device 100 or the control unit 110 and applications, and also store information on a set power saving mode condition and information on power saving items of which the use is limited in the power saving mode except for the basic phone call-related function (for example, a call, a message, or the like) according to an embodiment of the present invention.

The term "storage unit" is used as a term that refers to a predetermined data storing device such as the storage unit 175, a ROM within the control unit 110, a RAM or a memory card (for example, an SD card, a memory stick or the like) inserted into the electronic device 100. The storage unit 175 may also include a non-volatile memory, a volatile memory, a Hard Disk Drive (HDD), or a Solid State Drive (SSD).

Further, the storage unit 175 may store applications of various functions, images for providing a Graphical User Interface (GUI) related to the applications, databases or data related to a method of processing user information, a document, and a touch input, background images (a menu screen, a standby screen, or the like) or operating programs required for driving the electronic device 100, and images photographed by the camera module 150.

The storage unit 175 is a machine (for example, computer)-readable medium, and the term machine-readable medium may be defined as a medium that provides data to the machine so that the machine performs a specific function. The storage unit 175 may include a non-volatile medium and a volatile medium. All of these media should be tangible such that commands transferred by the media can be detected by a physical instrument such as the machine reading the commands.

The machine-readable medium includes at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), and a flash-EPROM, but is not limited thereto.

The power supply unit 180 may supply power to one or a plurality of batteries arranged at the housing of the electronic device 100 according to a control of the control unit 110. The one or plurality of batteries supply power to the electronic device 100. Further, the power supply unit 180 may supply power input from an external power source through a wired cable connected to the connector to the electronic device 100. In addition, the power supply unit 180 may supply power wirelessly input from the external power source through a wireless charging technology to the electronic device 100.

The electronic device 100 may include at least one touch screen 190 that provides user graphical interfaces corresponding to various services (for example, a phone call, data transmission, broadcasting, and photography) to the user.

The touch screen 190 may include a display panel that performs a display function for output information output from the electronic device 100 and an input panel that performs various input functions by the user. The display panel may be a panel such as an LCD, an AMOLED, or the like.

The display panel may display various screens according to various operation statuses of the electronic device 100, application execution, services, and the like. Further, according to various embodiments of the present invention, the display panel has screen brightness, which is set to a minimum in the power saving mode, and may display other functions except for a power saving call-related function as the deactivated state. Alternatively, the display panel may display a power saving screen in which the other functions except for the power saving call-related function are processed to be hidden.

The input panel may be implemented by one or more panels that may detect various inputs such as a single or a multi touch input of the user, a drag input, a writing input, a drawing input, and the like using various objects including a pen and the like. For example, the input panel may be implemented using one panel that may detect both a finger input and a pen input or may be implemented using two panels including a touch recognition module that may detect a finger input and a pen recognition module that may detect a pen input. According to various embodiments of the present invention, a touch booster used for improving the performance of a touch sensitivity may be disabled in the power saving mode. In the power saving mode, in addition to the touch booster, the use of a booster for detecting a scroll, a rotation, and the like or at least one booster used for improving the performance may be limited. As described above, by limiting the use of the boosters, current consumption can be reduced.

The touch screen 190 may output a signal corresponding to at least one user input which is input to the user graphical interface to the touch screen controller 195. The touch screen 190 may receive at least one user input through a user's body (for example, fingers including an index finger). The touch screen 190 may receive successive motions of one touch. The touch screen 190 may output an analog signal corresponding to the successive motions of the input touch to the touch screen controller 195.

According to various embodiments of the present invention, the touch is not limited to a contact between the touch screen 190 and a user input means such as a finger or the like and may include a non-contact (for example, a case where the user input means is located within a recognition distance (for example, 1 cm) in which the user input means can be detected without a direct contact with the touch screen 190). The distance or interval in which the screen 190 can recognize the user input means may be changed according to a performance or a structure of the electronic device 100. The screen 190 may be configured to output different values (for example, including a voltage value or a current value as an analog value) detected by a direct touch event and a hovering event so that the direct touch event by the contact with the user input means and an indirect touch event (that is, the hovering event) can be distinguished from each other.

The touch screen 190 may be implemented in, for example, a capacitive type, an infrared type, an acoustic wave type, or a combination thereof.

The touch screen controller 195 converts a signal input from the touch screen 190 to a digital signal and transmits the converted digital signal to the control unit 110. The control unit 110 may control a user interface displayed on the touch screen 190 by using the digital signal received from the touch screen controller 195. For example, the control unit 110 allows a short-cut icon (not shown) or an object displayed on the touch screen 190 to be selected or executed in response to the direct touch event or the hovering event. Further, the control unit 110 may switch to the power saving mode in response to the touch event. The touch screen controller 195 may be integrated into the control unit 110.

The touch screen controller 195 may identify a hovering interval or distance as well as a location of the user input by detecting a value (for example, a current value or the like) output through the touch screen 190, convert the identified distance value to a digital signal (for example, a Z coordinate), and provide the converted digital signal to the control unit 110. Further, the control unit 110 may detect various user inputs received through the input/output module 160 as well as the touch screen 190. The user input may include various types of information input into the device 100, such as a gesture, a voice, a pupil action, and a bio signal of the user as well as the touch. The control unit 110 may make a control to perform a predetermined operation or function corresponding to the detected user input. For example, the control unit 110 may switch to the power saving mode or the normal mode in accordance with the user input and perform an operation of changing a setting in the power saving mode.

Further, according to various embodiments of the present invention, each function unit and module may refer to a functional or structural combination of hardware for realizing the technical idea of the present disclosure and software for driving the hardware. For example, each function unit may refer to a logical unit of a predetermined code or a hardware resource for executing the predetermine code, and it may be easily inferred by those skilled in the art that the function unit does not necessarily refer to a physically connected code or one type hardware.

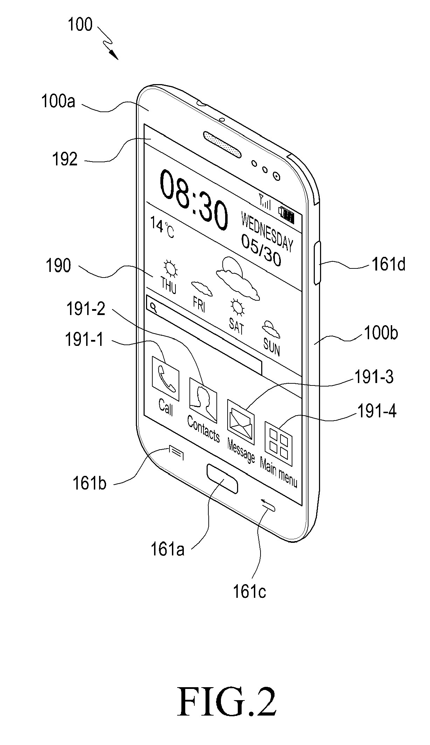

FIG. 2 is a front perspective view of the electronic device according to various embodiments of the present invention.

Referring to FIG. 2, the touch screen 190 corresponding to an example of the display unit may be disposed at the center of a front surface 100a of the electronic device 100. The touch screen 190 may be formed largely enough to occupy most of the front surface 100a of the electronic device 100. FIG. 2 illustrates an example where a main home screen is displayed on the touch screen 190. The main home screen is a first screen displayed on the touch screen 190 when power of the electronic device 100 is turned on. When the electronic device 100 has different home screens of a plurality of pages, the main home screen may be the first home screen among the home screens of the plurality of pages. Short-cut icons 191-1, 191-2, and 191-3 for executing frequently used applications, a main menu switching key 191-4, time, weather and the like may be displayed on the home screen. When the user selects the main menu switching key 191-4, the menu screen is displayed on the touch screen 190. Further, a status bar 192 which displays the status of the electronic device 100 such as a battery charging status, a received signal intensity, and a current time may be formed on an upper part of the touch screen 190. According to various embodiments of the present invention, an icon indicating the power saving mode may be displayed on the status bar 192. When the power saving mode switching condition is met, the icon may be activated and displayed.

A home button 161a, a menu button 161b, and a back button 161c may be formed below the touch screen 190. The home button 161a displays the main home screen on the touch screen 190. For example, when the home button 161a is selected in a state where any home screen different from the main home screen or the menu screen is displayed on the touch screen 190, the main home screen may be displayed on the touch screen 190. Further, when the home button 161a is selected while applications are executed on the touch screen 190, the main home screen may be displayed on the touch screen 190.

In addition, the home button 161a may be used to display recently used applications or a task manager on the touch screen 190.

The menu button 161b provides a connection menu which can be displayed on the touch screen 190. The connection menu may include a widget addition menu, a background image changing menu, a search menu, an editing menu, an environment setup menu and the like.

The back button 161c may be used to display the screen which was executed just before the currently executed screen or to terminate the most recently used application.

For, a power/lock button 161d, volume buttons including a volume increase button and a volume decrease button, or one or a plurality of microphones may be arranged at a side surface 100b of the electronic device 100.

According to various embodiments of the present invention, when an emergency disaster message is received or when the power saving mode switching condition such as a residual amount of the battery, which is equal to or lower than a threshold, is met, information for inducing entry into the power saving mode or information for informing of the entry into the power saving mode may be displayed on the touch screen 190 of the electronic device 100 in the form of a pop up window.

For example, when the emergency disaster message is received, information on the received message may be displayed on the touch screen 190 of the electronic device 100 in the form of a pop up window. Further, the reception of the information on the received message may be displayed on the status bar 192.

According to various embodiments of the present invention, when the electronic device 100 enters the power saving mode, the electronic device 100 may change one or more settings of the electronic device 100. According to an embodiment of the present invention, the electronic device 100 may change the one or more settings of the electronic device 100 by parsing the received emergency disaster message. For example, the electronic device 100 may change a display mode of the touch screen 190, change a display method of the home menu, or set a particular application not to be used, and detailed embodiments thereof will be described below.

The detailed structure of the electronic device 100 has been described above as various examples of the electronic device to which the present invention can be applied. However, as described above, the electronic device according to embodiments of the present invention is not limited to the electronic device illustrated in FIGs. 1 and 2.

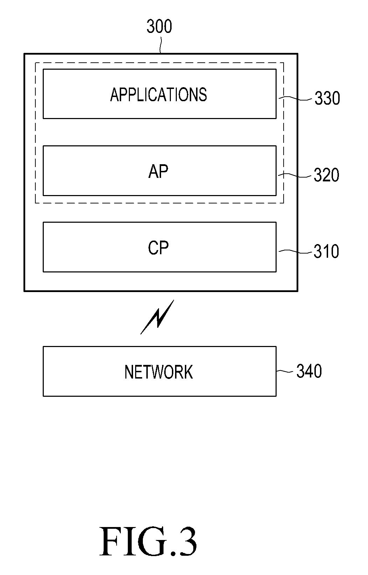

FIG. 3 illustrates a configuration of a power saving mode processing device according to an embodiment of the present invention.

Referring to FIG. 3, a power saving mode processing device 300 according to various embodiments of the present invention may include a call processor 310, an application processor 320, and applications 330. Here, the elements of the power saving mode processing device 300 may be implemented within the control unit 110 of FIG. 1.

First, the call processor 310 may control an operation for providing a basic call function through a network 340 by controlling the communication module 120 of FIG. 1.

The application processor 320 may boot an operating system and control an operation related to execution of various applications 330 in an operating system environment. For example, the application processor 320 may perform an operation for providing other functions except for the basic call-related function such as a camera function, a video reproduction, a music file reproduction, or the like.

The application processor 320 may communicate with the call processor 310 through a kernel data route. Accordingly, when the call processor 310 receives basic call-related data, for example, a call or a message through the network 340, the application processor 320 may receive the related data from the call processor 310 through the kernel data route.

Further, when the booting of the operating system is completed, the application processor 320 may control the electronic device 100 to enter a standby mode and display a standby screen on the touch screen 190. When a lock function is configured after the booting is completed, a lock screen may be displayed.

The network 340 may be implemented regardless of an aspect of communication such as wired and wireless communication, and may be implemented by various communication networks including a Personal Area Network (PAN), a Local Area Network (LAN), a Metropolitan Area Network (MAN), a Wide Area Network (WAN), and the like. Further, the network 340 may be a known World Wide Web (WWW), and may use a wireless transmission technology utilized for short distance communication such as Infrared Data Association (IrDA) or Bluetooth. In addition, the network 340 may include a cable broadcasting communication network, a terrestrial broadcasting communication network, and a satellite broadcasting communication network for receiving a broadcasting signal by the power saving mode processing device 300.

In a power saving mode operation according to various embodiments of the present invention, the call processor 310 may minimize power consumption by blocking functions (for example, functions related to the network 340) related to various types of communication. When blocking the functions related to the network 340, that is, a communication connection, the call processor 310 according to various embodiments of the present invention may stop the communication stage by stage, and may determine a communication scheme to block the communication in consideration of various methods of blocking the communication based on at least one of a scheme having high power consumption, a scheme having a low use frequency, and a recently used scheme. For example, when the call processor 310 is in a connection state through at least one of communication schemes such as Bluetooth, Wi-Fi, and the like, the call processor 310 may sequentially block the communication in consideration of at least one of the scheme having high power consumption, the scheme having the low use frequency, and the recently used scheme.

The application processor 320 according to various embodiments of the present invention may minimize power consumption by blocking execution of another application except for an application necessary in the power saving mode.

The call processor 310 and the application processor 320 may selectively apply at least one of the various methods of limiting functions to reduce power consumption, and the various methods of limiting functions will be described below.

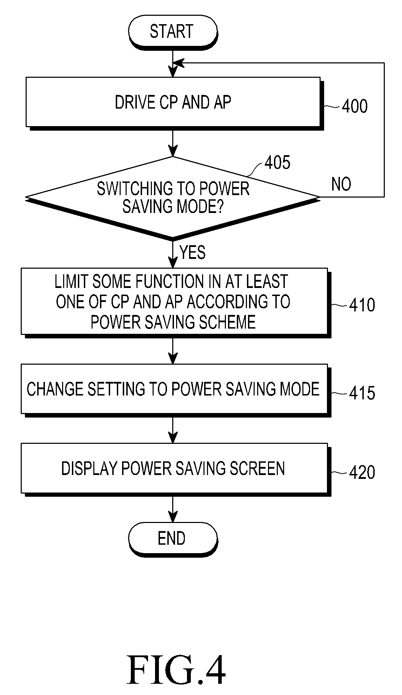

FIG. 4 is a flowchart illustrating an operation for switching to the power saving mode of the electronic device according to various embodiments of the present invention.

Referring to FIG. 4, the electronic device 100 may supply power to the call processor 310 or the application processor 320 in the normal mode and thus both the call processor 310 and the application processor 320 are driven in operation 400. A standby screen may be displayed in such a state and become a screen off state after a preset time passes.

As described above, in a state where both the call processor 310 and the application processor 320 are driven, a screen corresponding to a user input may be displayed by the application processor 320. The screen may include, for example, a standby screen, a main menu screen, an application execution screen, or the like.

According to various embodiments of the present invention, in such a state, the electronic device 100 may determine whether switching to the power saving mode is selected in operation 405. In a manual type, the user may select the switching to the power saving mode through a mode setting menu or the like. Further, in an automatic type, the electronic device 100 may switch to the power saving mode when a set power saving mode switching condition is met. When the switching to the power saving mode is selected, the electronic device 100 may limit some functions of at least one of the call processor and the application processor in accordance with the power saving scheme in operation 410.

According to various embodiments of the present invention, driving of at least one of the call processor and the application processor may be blocked in accordance with the power saving scheme. For example, the driving of the application processor 320 may be blocked and only the call processor 310 may be driven in order to perform only a basic call-related function. At this time, peripheral devices such as the touch screen 190 and the keypad 166 may operate for a screen display and a key input. In this case, the basic call-related function such as a call, a message, or the like may be performed by the call processor 310, and a minimum application for performing the basic call-related function may be executed. As described above, when only one processor is driven, power consumption is reduced and thus a battery use time may be maximized.

According to various embodiments of the present invention, when the switching to the power saving mode is selected in the normal mode in which both the call processor 310 and the application processor 320 are driven, the electronic device 100 may change a setting to the power saving mode in operation 415. Subsequently, the electronic device 100 may display a power saving mode screen in operation 420 according to the switching to the power saving mode. Although FIG. 4 illustrates, as an example, a case where driving of one processor is blocked when the electronic device switches to the power saving mode, the electronic device may be implemented to limit some functions of the call processor 310 or the application processor 320 by a method selectively applied among the various methods of limiting functions for power saving.

According to various embodiments of the present invention, a method of executing a power saving mode in the electronic device may limit an operation of driving one or more processors; an operation of detecting a command for switching to the power saving mode; and an operation of, when the command for switching to the power saving mode is detected, limiting operations of the one or more processors to block set functions other than a power saving call function in accordance with at least one of set power saving schemes.

According to various embodiments of the present invention, the one or more processors may include at least one of the call processor and the application processor.

According to various embodiments of the present invention, the set power saving schemes may include at least one of a network limiting scheme for limiting transmission of information based on a network, a process limiting scheme for limiting the use of a background service in a screen off state, an application limiting scheme for limiting the use of other applications except for a set necessary application, and a screen limiting scheme for limiting a screen display.

According to various embodiments of the present invention, the command for switching to the power saving mode may be one of a request for switching a mode by the user and reception of an emergency message.

According to various embodiments of the present invention, the emergency message may be received from a server in response to a request from a designated user.

According to various embodiments, in the network limiting scheme, the call processor may fix a network function (NAT) in order to increase a sleep period of a model when the screen is turned off.

According to various embodiments of the present invention, in a case of the network limiting scheme, the route table may be deleted to block mobile data transmission/reception between the application processor and the call processor when the screen is turned off.

According to various embodiments of the present invention, when the turned off screen is turned on, the route table may be reconstructed.

According to various embodiments of the present invention, in a case of the network limiting scheme, the call processor may block transmission of network information received from the network to the application processor when the screen is turned off.

According to various embodiments of the present invention, in a case of the process limiting scheme, the process in the application processor may be pended when the screen is turned off and the process pended in the screen off state may be performed when the turned off screen is turned on.

According to various embodiments of the present invention, when the command for switching to the power saving mode is detected, if the electronic device is connected based on at least one of one or more communication schemes, communication may be sequentially blocked based on at least one of a scheme having large power consumption, a scheme having a low use frequency, and a recently used scheme.

According to various embodiments of the present invention, the set necessary application may include at least one of a phone call application, a message application, and a web browser application.

According to various embodiments of the present invention, the screen limiting scheme may include at least one of an operation of changing the screen brightness to a predetermined value and an operation of switching the screen to a gray mode.

According to various embodiments of the present invention, when the command for switching to the power saving mode is detected, a power saving screen may be displayed, which is configured using at least one of a control of brightness of a screen of a display unit, switching of the screen of the display unit to a gray mode, switching of a home screen of the display unit to a home screen of a minimum function, and deactivation of other applications except for a set necessary application.

Hereinafter, various embodiments of the present invention will be described based on a network power saving scheme, a process power saving scheme, an application limiting power saving scheme, and a screen power saving scheme, which are largely divided from the power saving schemes to limit various functions. Among the power saving schemes, at least one power saving scheme may be selectively applied.

Further, according to an embodiment, a function for gradually controlling power saving stages according to at least one power saving scheme selected from the power saving schemes may be provided.

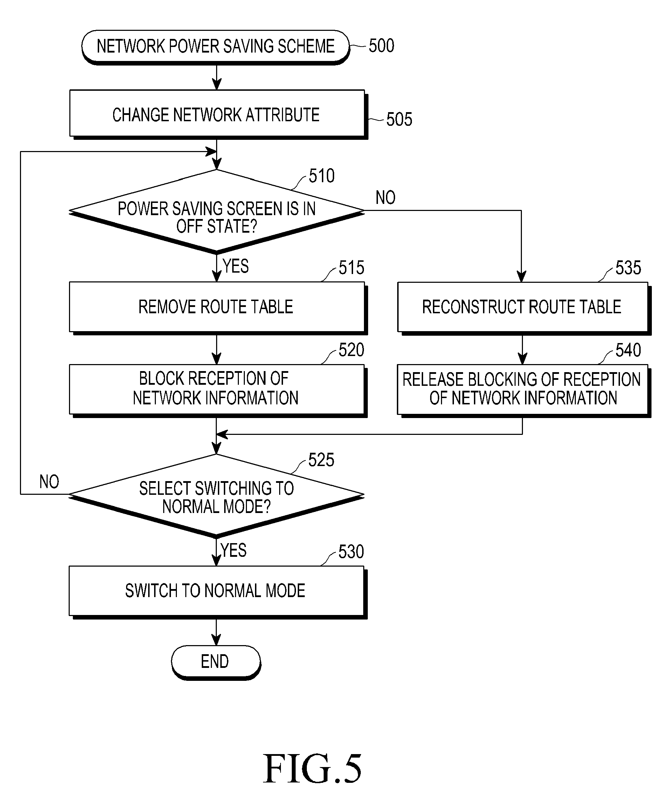

FIG. 5 is a flowchart illustrating an operation in the power saving mode based on a network power saving scheme according to various embodiments of the present invention. The network power saving scheme may refer to a scheme for limiting transmission of information based on a network.

Referring to FIG. 5, the electronic device 100 according to various embodiments of the present invention may change network attributes in operation 505 in a case of the network power saving scheme 500. To this end, the electronic device 100 may not search for another network by changing a network preference into one attribute. For example, in order to increase a sleep period of a modem when the screen is turned off, the call processor 310 may fix a network function (NAT) and, accordingly, set the network preference to be fixed to a WCDMA network.

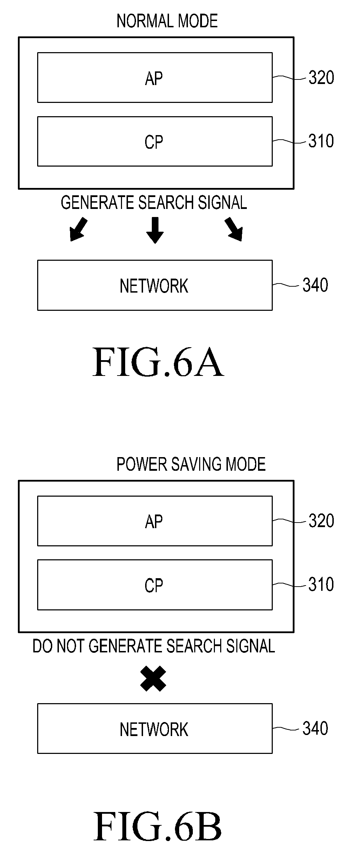

Referring to FIG. 6A according to various embodiments of the present invention, when the electronic device accesses a WCDMA-based 3G network in the normal mode, the call processor 310 may generate a search signal for an LTE connection in order to perform an operation for an Internet connection according to a user input. When the electronic device accesses an LTE network, in order to provide a voice service for a call, the call processor 3101 may generate a signal for a 3G network search to search for a 3G network. At this time, LTE does not provide a Circuit Switching (CS)-based voice service. Accordingly, based on the fact that the basic call has a highest priority in the power saving mode, power consumption can be reduced if the search for the network for LTE is blocked.

Referring to FIG. 6B according to various embodiments of the present invention, the 3G network is fixed in the power saving mode. Accordingly, the call processor 310 has only to maintain the 3G mode and thus does not generate a search signal for searching for another network. As a result, the search signal for another network is not generated, and the call processor 310 may reduce power consumption according to the generation of the search signal. As described above, after the network attribute is changed, the electronic device 100 may deactivate an LTE icon displayed on the status bar and display the power saving screen in which the use of LTE is limited. The power saving screen may become in an off state when a predetermined time passes. However, battery consumption may be high in a weak electric field having a signal strength equal to or lower than a predetermined strength in the 3G network after the LTE network is blocked, so that the electronic device may return to the network for LTE to save power.

According to various embodiments of the present invention, as described above, for the Internet connection in the normal mode, the call processor 310 may generate the search signal for the LTE connection or generate the signal for searching for the 3G network for the voice service, and transmission of the search signal is performed according to a predetermined first period. However, in the power saving mode, the transmission may be performed according to a second period rather than the first period of the normal mode. Here, the second period may be longer than the first period, and a length thereof may be determined according to a network environment. For example, when the electronic device 100 is located in an area where service is impossible in the power saving mode, searching for the network according to the predetermined first period causes unnecessary power consumption. Accordingly, the call processor 310 according to an embodiment of the present invention may reduce power consumption by increasing the network search period.

Further, according to various embodiments of the present invention, when the electronic device moves to a roaming area, the electronic device performs a periodic network search to find a network having a better quality than that of the current network, for example, a network having a higher priority. However, the call processor 310 according to an embodiment of the present invention may stop the network search for a better quality network in the power saving mode even though a roaming situation occurs.

Accordingly, the electronic device 100 may determine whether the power saving screen is in an off state in operation 510 according to various embodiments of the present invention. When the power saving screen is in the off state, the electronic device may remove a route table in a kernel region in operation 515. When the route table is removed, the use of mobile data may be limited in the screen off state. The route table may include route information for allowing the application processor 320 to select a corresponding network interface to transmit data to a given destination. Since the information contained in the route table has been already known, a detailed description thereof will be omitted.

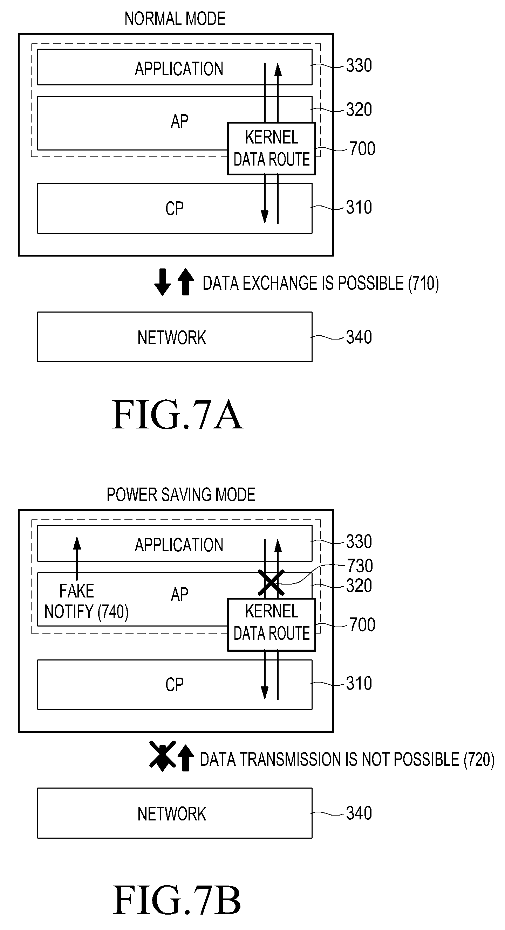

Referring to FIG. 7A according to various embodiments of the present invention, the application processor 320 may make a request for data to the call processor 310 through a kernel data route 700 in the normal mode and, accordingly, the call processor 310 can exchange data with the network 340, that is, transmit and receive data from/to the network 340 as indicated by reference numeral 710.

However, when the power saving screen is turned off in the power saving mode according to various embodiments of the present invention, the route table is removed from the kernel region and thus the kernel data route 700 between the application processor 320 and the call processor 310 may be blocked as indicated by reference numeral 730 of FIG. 7B. That is, when the route table is removed, the application processor 320 corresponding to an actual platform area cannot know the route, so that data transmission to the call processor 310, which serves as the modem or exists within the modem, may be impossible. Accordingly, a socket cannot be generated and the application processor 320 may determine that the connection with the network 340 is disconnected.

Further, the call processor 310 can receive data from the network 340 but cannot transmit data to the network as indicated by reference numeral 720 and, accordingly, the call processor 310 may not transmit the data received from the network 340 to the application processor 320. That is, the call processor 310 may control waking-up of the application processor 320. As described above, when the screen is in the off state, it is possible to prevent the application processor 320 from being woken up by anything other than the allowed processor.

At this time, the data transmitted to the call processor 310 from the network 340 may hardly exist in practice. This is because, from the point of view of the application processor 320, the connection with the network 340 is disconnected and thus the socket cannot be generated. For example, the electronic device may be implemented to not use a push service of a messenger application and, when the electronic device becomes in a Screen On state, implemented to notify of message reception information.

According to various embodiments of the present invention, the application processor 320 cannot transmit data to the call processor 310 and thus considers that the connection is disconnected. As a result, the application processor 320 may notify of a disconnected state to a corresponding application 330 as indicated by reference numeral 740. However, since the connection between the call processor 310 and the network 340 is still maintained in practice, the notification may actually correspond to a fake notify 740. When reception of mobile data is requested or blocked whenever the screen is turned on/off, a request for a data connection or disconnection is transmitted to the network every time, so that a network speed becomes slower and also the network itself is overloaded due to the request. In addition, since a connection or a disconnection operation in the call processor is also performed, the electronic device 100 may generate large power consumption. However, according to various embodiments of the present invention, the connection between the call processor 310 and the network 340 is normally maintained regardless of the screen on/off and thus, even though the screen on/off is repeated, power consumption is not generated by the repetitive operation. Therefore, the power consumption can be minimized through the removal of the route table alone.

Further, according to various embodiments of the present invention, the application processor 320 transmits/receives no data and the data received by the call processor 310 is not transmitted to the application processor 320, so that the power consumption can be minimized by controlling waking-up and blocking data transmission/reception.

Meanwhile, according to various embodiments of the present invention, the electronic device 100 may block reception of network information in operation 520. For example, reception of information on a network-related function such as Network Identity and Time Zone (Nitz) may be blocked. Accordingly, in the screen off state, the electronic device 100 does not receive network time information from the network and, accordingly, does not need to update reception of the network time information, thereby reducing power consumption. That is, the call processor 310 does not need to wake up to receive network information, thereby minimizing power consumption. In this case, according to various embodiments of the present invention, the electronic device 100 may update time information based on Real Time Clock (RTC) information of the electronic device 100 itself. The electronic device may block not only the network information but also a proactive command. The proactive command is a command that is transmitted to the call processor 310 from a SIM card of the electronic device 100, and the call processor 310 may transmit a request based on the proactive command to a server existing in the network according to the proactive command. Accordingly, in the power saving mode according to an embodiment of the present invention, it is possible to block the proactive command using the network and reduce power consumption.

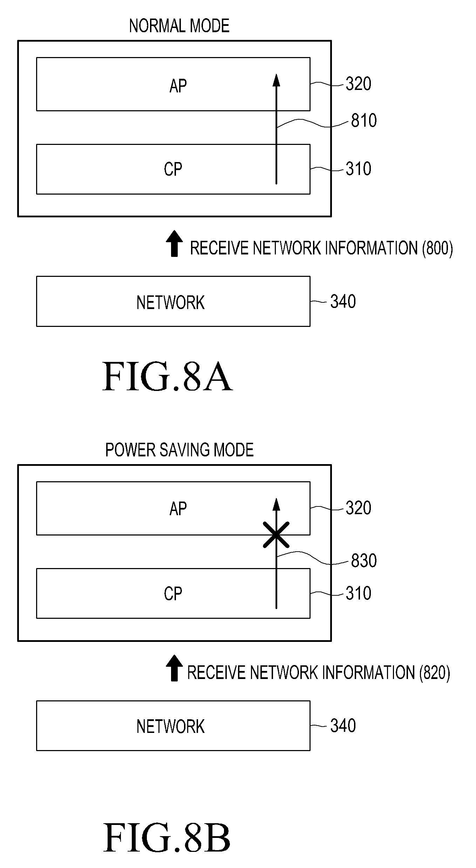

FIG. 8A illustrates a case 810 where data transmission/reception is performed between the application processor 320 and the call processor 310 when network information is received in the normal mode as indicated by reference numeral 800. In the normal mode, the application processor 320 can receive network information transmitted through the call processor 310.

FIG. 8B according to various embodiments of the present invention illustrates a case 830 where the received network information is not transmitted to the application processor 320 when the network information is received in the power saving mode as indicated by reference numeral 820. According to various embodiments of the present invention, the network information is not transmitted to the application processor 320 in the screen off state of the power saving mode. That is, even though the call processor 310 receives the network information from the network 340, the call processor 310 filters the network information and does not transmit the network information to the application processor 320. Accordingly, there is an effect of blocking the waking-up of the application processor 320 by the call processor 310. Here, the network information corresponds to the network-related function such as Nitz and may refer to control information rather than user information.

Subsequently, the electronic device 100 according to various embodiments of the present invention determines whether switching to the normal mode is selected in operation 525 and, when the switching to the normal mode is selected, switches to the normal mode in operation 530. In contrast, when the switching to the normal mode is not selected in operation 525, the electronic device 100 determines whether the power saving screen is in the off state in operation 510. When the screen is turned on by the user, the electronic device 100 may reconstruct the route table in operation 535.

More specifically, the route table, which existed in the kernel region, is removed when the screen is turned off, but route information on a destination within a link property corresponding to a region which can be accessed by the application processor 320 is not removed. Accordingly, when the screen is turned on, the application processor 320 reconstructs the route table based on the route information on the destination.

Alternatively, when the screen is turned on, the electronic device 100 may make a request for a data call list to the network 340, and update the route table based on a response to the request.

The electronic device 100 according to various embodiments of the present invention may release the blocking of the reception of the network information in operation 540. Accordingly, the electronic device 100 may perform an operation of updating the network time. Thereafter, the electronic device may return to operation 510 and repeatedly perform the aforementioned processes unless the switching to the normal mode is selected in operation 525.

As described above, according to various embodiments of the present invention, by processing operations, which were stopped in the screen off state, at once when the screen is turned on, periodic reception of the network information and transmission/reception of data for the operation executed in the background are blocked in the screen off state, and thus unnecessary power consumption generated in the screen off state may be prevented.

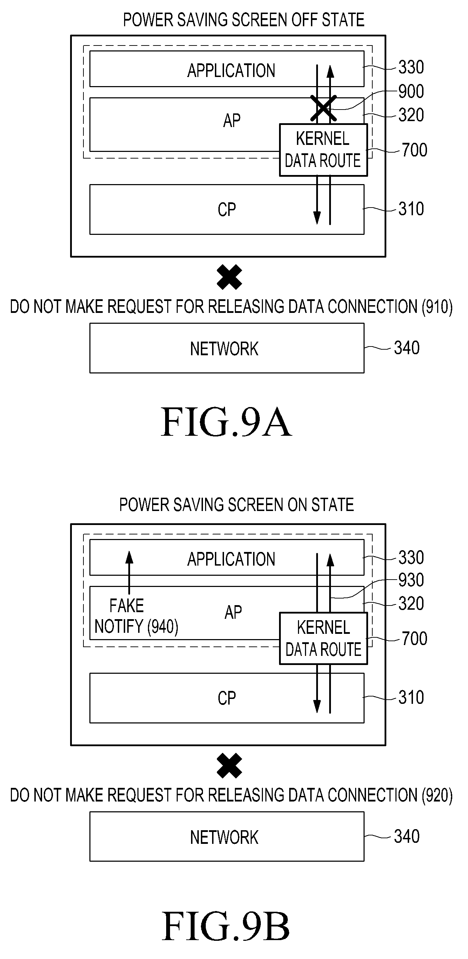

At this time, operations of the call processor 310 and the application processor 320 in a power saving screen off state and a power saving screen on state will be described in detail with reference to FIG. 9.

FIG. 9A illustrates a case 900 where data transmission/reception between the application processor 320 and the call processor 310 through the kernel data route 700 is blocked when the power saving screen is in the off state. As illustrated in FIG. 9A, since the removal of the route table corresponds to a removal of internal route information, the call processor 310 does not make a request for releasing the data connection to the network 340. Accordingly, the connection between the call processor 310 and the network 340 may be normally maintained. As described above, the method of blocking the data in the screen off state corresponds to a blocking method using the route table, which is not in the physically disconnected state in practice.

FIG. 9B illustrates a case 930 where the route table is reconstructed and data transmission/reception between the application processor 320 and the call processor 310 through the kernel data route 700 is performed when the power saving screen is in the on state. At this time, the application processor 320 may consider that the connection with the network 340 is made again through the reconstructed route table and notify the application 330 of a connected state as indicated by reference numeral 940. However, since the connection between the call processor 310 and the network 340 has not been released in practice, the notification may actually correspond to a fake notify 940. Further, since the connection between the call processor 310 and the network 340 is normally maintained, a separate data connection request is not needed as indicated by reference numeral 920. As described above, according to various embodiments of the present invention, since the route table is removed or reconstructed when the screen is turned off or on, it is not required to transmit the request for the connection/disconnection operation to the network 340, so that a network speed becomes faster. Further, the call processor 310 does not need to perform the connection/disconnection operation with the network 340, thereby minimizing power consumption. That is, the disconnection or the connection is made only in the application processor 320 and the call processor 310 and the network 340 has no additionally required operations, thereby improving power consumption.

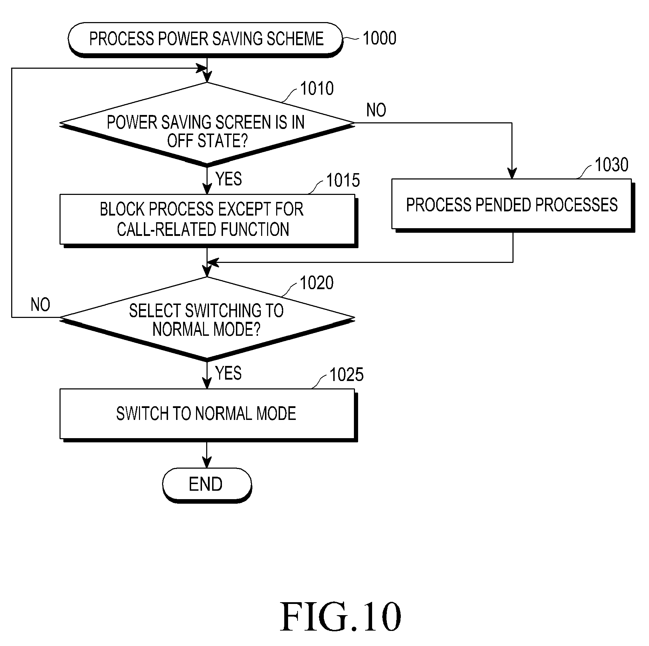

Meanwhile, FIG. 10 is a flowchart illustrating an operation in the power saving mode based on a process power saving scheme according to various embodiments of the present invention. The process power saving scheme corresponds to a scheme for limiting the use of a background service in the screen off state and limits an operation of the application processor 320.

Referring to FIG. 10, in a case of the process power saving scheme 1000, the electronic device 100 according to various embodiments of the present invention may determine whether the power saving screen is in the off state in operation 1010. Hereinafter, the process power saving scheme is performed by the application processor 320 but may be performed by the call processor 310 or the control unit 110 with reference to operation information on the application processor 320. Subsequently, the electronic device may determine whether the power saving screen is in the off state in operation 1010.

When the power saving screen is not in the off state in operation 1010, the electronic device 100 according to various embodiments of the present invention may stop at least one process to be not used in the power saving mode according to the process power saving scheme. For example, in an emergency situation requiring power saving, the electronic device may stop at least one process except for the process of enabling only a power saving call function, changing a display mode of the touch screen 190, changing a display method of the home menu, or setting the use of a particular application to be non-available. As described above, by stopping at least one process to be not used in the power saving mode, the operation of an unnecessary application can be blocked.

When the power saving screen is in the off state in operation 1010, the electronic device 100 according to various embodiments of the present invention may block the process in the application processor 320 except for the call-related function in operation 1015. Accordingly, a list of the processes to be processed in the screen off state, for example, an alarm process table may be removed.

The blocking of the process according to various embodiments of the present invention may refer to an operation of limiting the process, and the limited process may include, for example, limiting a starting of a process by a Real Time Communication (RTC) interrupt, a starting of an application process, and a synchronization operation. Among them, the RTC interrupt refers to all interrupts registered in the unit of time and all tasks requested to be processed by the control unit 110, that is, the CPU may be blocked by the interrupts.

Accordingly, when the control unit 110 executes a program, if a device such as input/output hardware has something to process or an exceptional situation to be processed occurs, it may be informed of to the control unit 110. According to various embodiments of the present invention, processing required by the interrupt may be temporarily pended in the screen off state and then may be performed when the screen is turned on. Further, when a third party application makes a request for processing the process to the control unit 110, the control unit 110 does not process the request in the screen off state and then may perform processing when the screen is turned on. For example, other functions except for a signal received in a control message form such as a call, a message, or the like may be blocked. Accordingly, the electronic device may be implemented to not use the push service in the screen off state and to notify of push information when the screen is turned on. The application processor 320 may be implemented to not execute all processors for synchronization. As described above, in the screen off state, processing of all processes except for a system area and a network area may be pended in a buffer queue.

Instead of processing tasks whenever the processing is requested by the interrupt generated during the screen off state, the control unit 110 according to various embodiments of the present invention may store the tasks in the buffer queue. That is, as the tasks requested to be processed are added to the buffer, an alarm process table indicating tasks, which should be processed while the screen is actually turned off, may be removed.

According to various embodiments of the present invention, in a state where the power saving mode is maintained, the electronic device may determine whether the switching to the normal mode is selected in operation 1020. When the switching to the normal mode is selected, the electronic device may switch to the normal mode in operation 1025. Unlike this, when the switching to the normal mode is not selected in operation 1020, the electronic device returns to operation 1010 and determines whether the power saving screen is in the off state. When the turned off power saving screen is turned on, the electronic device 100 processes the pended processes in operation 1030 and proceeds to operation 1020. Accordingly, the processes pended in the buffer queue may be processed at once. The electronic device returns to operation 1010 and repeatedly performs the aforementioned processes unless the switching to the normal mode is not selected in operation 1020.

According to various embodiments of the present invention, in the power saving mode, registration of an alarm manager (Alarm Manager) 3rd party application service may be limited. Accordingly, the use of a background service of the corresponding application may be limited.

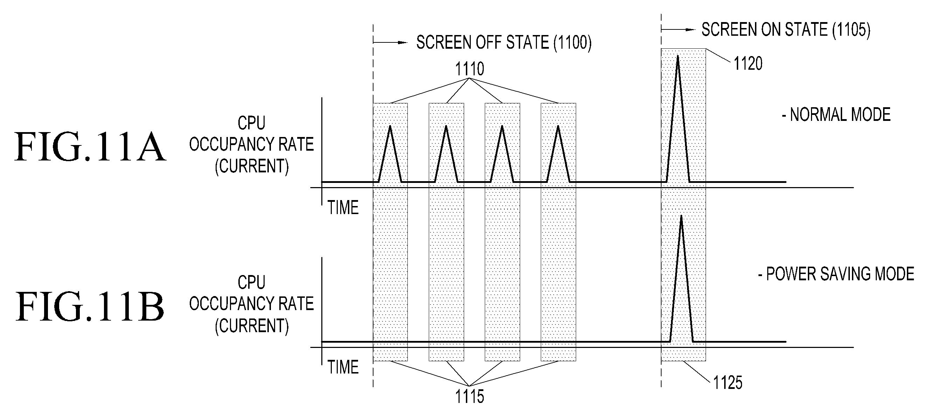

FIG. 11 illustrates current consumption in the electronic device 100 according to the screen off/on state in each of the normal mode and the power saving mode.

Referring to FIG. 11A, in the normal mode, four alarms and a process start may be generally attempted in a screen off state 1100 as indicated by reference numeral 1110. In the normal mode, partial wake-up corresponding to the attempt 1110 may be generated. Current consumption may occur whenever the wake-up is generated. Thereafter, when the screen becomes in the on state 1105, the application processor 320 becomes in a full wake-up state and controls operations related to execution of various applications 330, thereby generating large power consumption.

In contrast, as illustrated in FIG. 11B according to various embodiments of the present invention, the electronic device 100 may be implemented to maintain a sleep state without waking up the CPU of the electronic device 100 in the screen off state according to an embodiment of the present invention. Accordingly, since an attempt of the alarm and the process start is blocked in the screen off state while the electronic device operates in the power saving mode as indicated by reference numeral 1115, it is noted that the partial wake-up may not be generated. Therefore, there is no current consumption due to the attempt in the screen off state. In contrast, when the screen is turned on, all of the pended tasks, for example, the operations of the alarm and the processor may be processed at once as indicated by reference numeral 1125.

As described above, the partial wake-up is not generated in the screen off state in the power saving mode according to various embodiments of the present invention, so that the power saving effect may be created. More specifically, when the partial wake-up is generated, the electronic device does not enter the sleep mode immediately after the task is completed, but may enter the sleep mode after several seconds to several minutes since it takes time to stabilize the application processor 320 or the call processor 310. Accordingly, due to the limiting of the partial wake-up, current consumption may be significantly reduced even in consideration of the required time. Further, according to various embodiments of the present invention, even though the screen is turned on and all tasks are processed at once, the electronic device is in the full wake-up state, which is the same as that in the normal mode. Accordingly, more current is not consumption compared to the normal mode. That is, although the pended tasks are processed at once, the current equal to that in the normal mode is consumed.

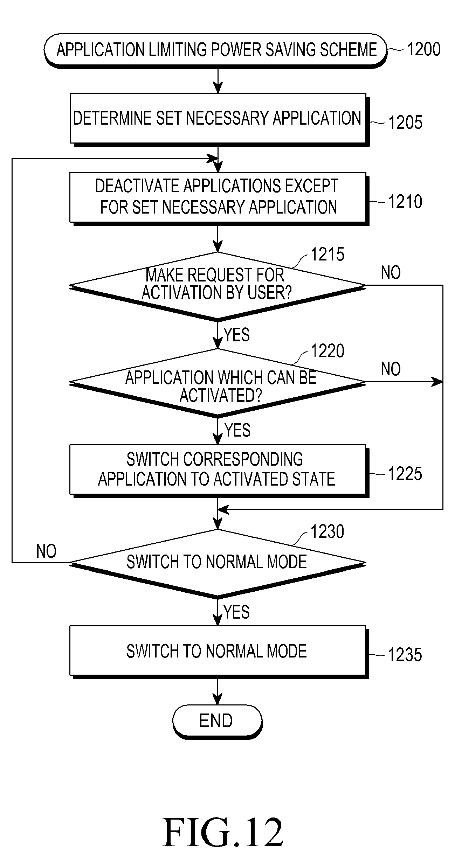

FIG. 12 is a flowchart illustrating an operation in the power saving mode based on an application limiting power saving scheme according to an embodiment of the present invention. Here, the application limiting power saving scheme refers to a scheme for limiting the use of other applications except for the set necessary application.

Referring to FIG. 12, in a case of the application limiting power saving scheme 1200, the electronic device 100 may determine the set necessary application in operation 1205, and then deactivate applications except for the set necessary application in operation 1210.

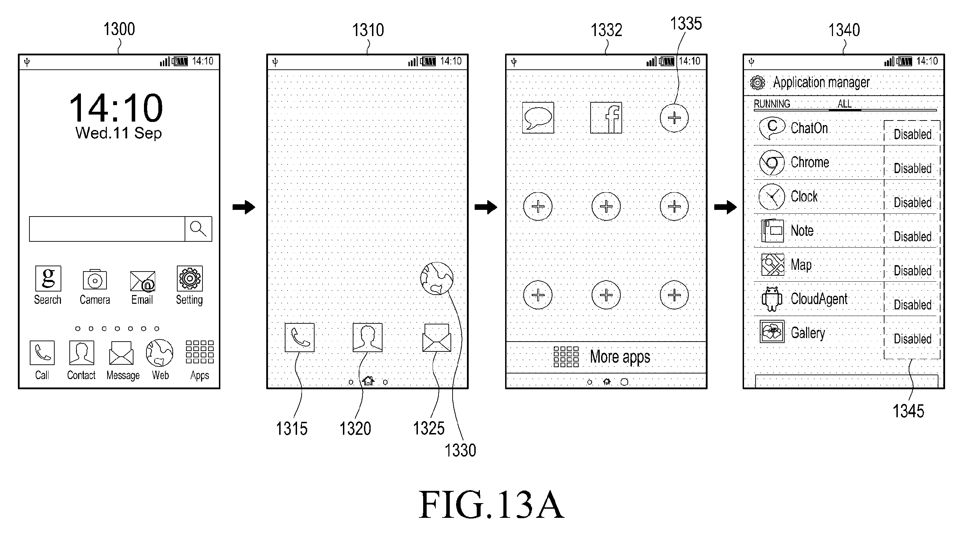

FIG. 13A illustrates an example where the electronic device changes a home screen configuration according to a setting of the power saving mode according to an embodiment of the present invention. Referring to FIG. 13A, when the electronic device switches to the power saving mode according to various embodiments of the present invention as described above, the electronic device may provide a home screen 1310 dedicated for the power saving mode in which only minimum functions are left and other applications or functions are removed from a home screen 1300. Accordingly, the power consumption can be minimized in the power saving mode.

As illustrated in FIG. 13A, the electronic device 100 may switch the home screen 1300 to the home screen 1310 in which the minimum functions are displayed, and may be implemented to use the minimum functions, that set necessary applications (for example, a phone call application 1315, a contact application 1320, a message application 135, a web browser application 1330, and the like). At this time, when the user selects a main menu switching key, a menu screen 1332 may be displayed on the touch screen 190, and the other applications except for the set necessary applications may be displayed in an inactive state on the menu screen 1332 or processed to be hidden as indicated by reference numeral 1335.

According to various embodiments of the present invention, the applications displayed on the home screen 1300 may be divided into a case where data transmission/reception through the network is required and a case where the data transmission/reception is not required when the applications are selected (or launched). For example, since the web browser application 1330 is an application requiring data transmission/reception, the web browser application 1330 may be allowed only when the web browser application 1330 is registered in the launcher. When the web browser application 1330 is not registered in the launcher, the web browser application 1330 may be displayed in the inactive state. Further, since the message application 1325 does not require data transmission/reception to/from the network when the user desires to see the content contained in the existing message, the message application 1325 may operate in a state where the electronic device is not connected to the network. That is, in the home screen 1310 dedicated for the power saving mode, the message application 1325 can be executed and thus the user can see the content contained in the existing message, but reception/transmission of a new message may be limited. However, when the message application 1325 is registered in the launcher, data use may be possible. Accordingly, when the message application 1325 is registered in the launcher, the reception/transmission of the message can be performed in the power saving mode.

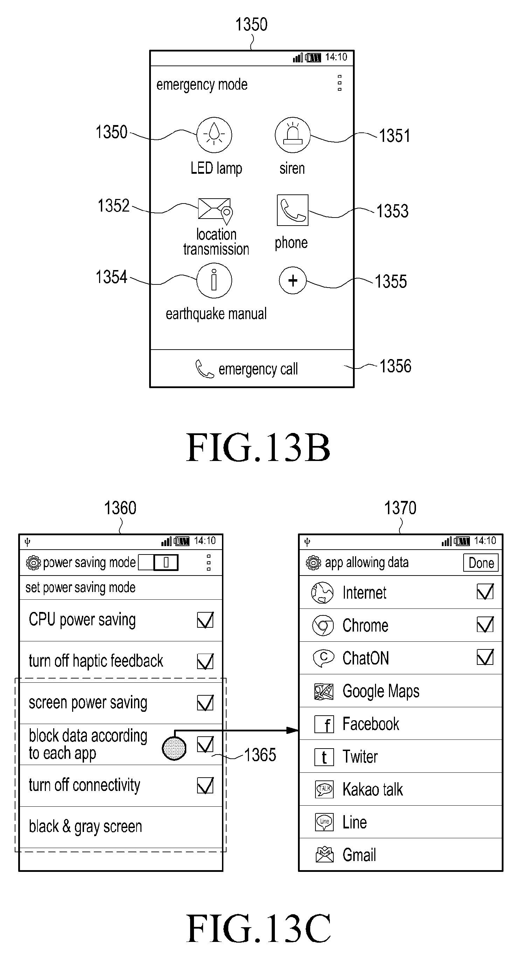

FIG. 13B illustrates a screen example of the home screen in the emergency mode of the electronic device 100 according to an embodiment of the present invention. As illustrated in FIG. 13B, when the electronic device switches to the emergency mode, necessary applications (for example, an LED lamp 1350, a siren 1351, location transmission 1352, a phone 1353, an earthquake manual 1354, an emergency call 1356, and the like) may be displayed on the home screen. At this time, an "+" icon 1355 may indicate a hidden application or may be used as a button for adding an application.

Meanwhile, even though the remaining applications except for the set necessary applications are deactivated as described above, the electronic device may be implemented to manually activate a particular application by the user among the deactivated applications according to an embodiment of the present invention. FIG. 13 is a screen example for describing a power saving mode setting scheme in the electronic device according to an embodiment of the present invention.

According to various embodiments of the present invention, when a power saving mode setting menu is selected by the user, a power saving mode setting screen 1360 may be displayed as illustrated in FIG. 13C. The user may set whether to use functions limited in the power saving mode on the power saving mode setting screen 1360. When the user selects, for example, a data blocking function according to each application 1365, an application list screen 1370 may be displayed. The user may select at least one application to be allowed in the power saving mode through a check box with respect to each application of the application list screen 1370.

As described above, data for other applications except for the application designated by the user or the basic application in the emergency/power saving mode may be blocked.

According to various embodiments of the present invention, when there is a user's request for activating at least one application among the deactivated applications displayed as "disabled" 1645 on a screen 1640 displaying the application list in operation 1215 as illustrated in FIG. 13A, the electronic device 100 may determine whether the corresponding application is an application which can be activated din the power saving mode in operation 1220. When the application of which the activation is requested by the user is the application which can be activated in the power saving mode based on a result of the determination, the corresponding application is switched to an activated state in step 1225.

In contrast, when the application of which the activation is requested by the user is not the application which can be activated in the power saving mode based on the result of the determination, the corresponding application is maintained in the deactivated state. At this time, the deactivated state of the application may be processed to have the same effect generated when the corresponding application is removed. Accordingly, for example, power consumption generated by the operation of the corresponding application in a background of the electronic device may be prevented.

According to various embodiments of the present invention, whether the application can be activated in the power saving mode may be determined in consideration of a degree of the power consumption of the corresponding application. For example, an application having large power consumption such as a game may be implemented to not be activated even by a user's request, and an application frequently used and having small power consumption such as a messenger may be implemented to switch to the deactivated state by default and to switch to the activated state according to a user's selection.

Further, based on usability, a maximum of N applications which the user desires may be activated. For example, when a maximum of 3 applications are set to be activated and applications A, B, C, and D are deactivated, if the user desires to use the applications A, B, and C, the user may switch the applications A, B, and C to the active state and then use them. However, if the user desires to use the application D, the user can release the inactive state of the application D after limiting the use of one of the applications A, B, and C. As described above, the maximum number of applications which can be activated by be randomly changed.

In such a state, when a command for switching to the normal mode is input (or detected) in operation 1230, the electronic device 100 may switch to the normal mode in operation 1235. When the command for the switching to the normal mode is not input (or detected), the electronic device 100 may return to operation 1210 and repeatedly perform the aforementioned process.

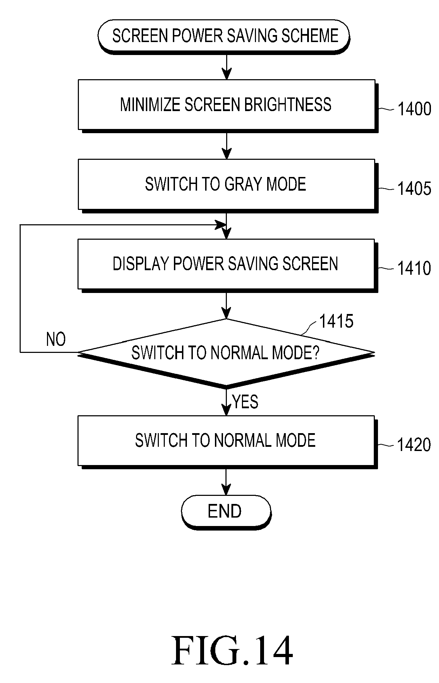

FIG. 14 is a flowchart illustrating an operation in the power saving mode based on a screen power saving scheme according to various embodiments of the present invention.

Referring to FIG. 14, when there is a command for switching to the power saving mode according to various embodiments of the present invention, the electronic device 100 may minimize screen brightness in operation 1400. Here, minimizing the screen brightness refers to setting the screen brightness to be predetermined brightness which can be read. For example, when a maximum value of the screen brightness is 100 and a black screen is 0, a value corresponding 10% may set as a minimum value of the screen brightness, and the minimum value of the screen brightness may be controlled.

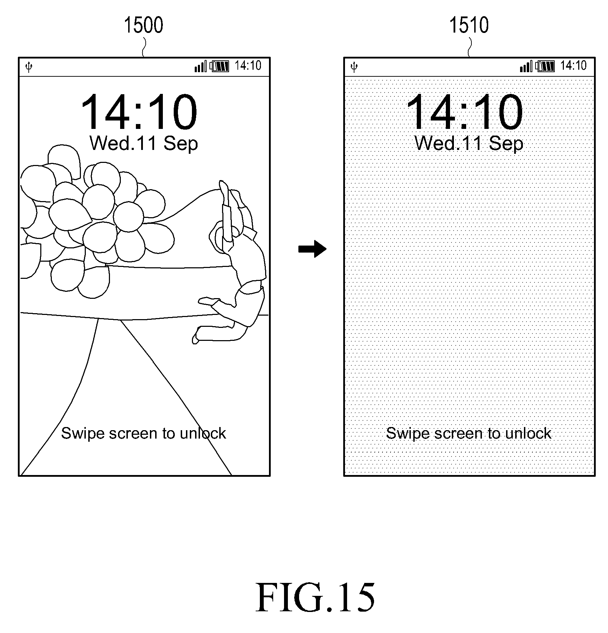

Further, the electronic device 100 may display a power saving screen 1510 in operation 1410 changing a display unit screen 1500 of the electronic device illustrated in FIG. 15 in operation 1405. When an animation is executed in the display unit screen 1500, if the electronic device switches to the power saving mode, the execution of the animation is stopped and a power saving screen 1510 in a stopped state may be displayed. By stopping the execution of the animation, the application processor 320 does not need an additional calculation and may reduce current consumption. In such a state, when a command for switching to the normal mode is input (or detected) in operation 1415, the electronic device 100 may switch to the normal mode in operation 1420. When the command for the switching to the normal mode is not input (or detected), the electronic device 100 may return to operation 1410 and repeatedly perform the aforementioned process. The power consumption may be reduced by decreasing a resolution of the screen as well as the screen brightness.

Meanwhile, a situation requiring the switching to the power saving mode may include, for example, an emergency disaster situation. For example, if battery consumption of the electronic device can be minimized when the emergency disaster situation occurs, it is possible to increase hours for contact with the outside in a dangerous situation and thus significantly increase a chance of rescue and survival.

Hereinafter, a method of minimizing battery consumption of the electronic device when the emergency disaster situation occurs will be described with an example according to an embodiment of the present invention.

Embodiments of the present invention discloses an apparatus and a method for switching a mode by an emergency disaster message which can minimize power consumption of the electronic device when an emergency disaster situation occurs by, when an emergency disaster message is received, analyzing the received emergency disaster message and switching a mode of the electronic device to a particular mode among a plurality of modes preset according to each urgent situation based on the content contained in the analyzed message.

In the embodiments of the present invention, the received emergency disaster message is analyzed and it is determined whether to switch the mode according to the analyzed message. At this time, according to an embodiment of the present invention, one emergency mode is set and the electronic device may switch to the one set emergency mode according to the content of the analyzed message. Further, according to another embodiment of the present invention, a plurality of emergency-related modes are set and a plurality of modes are switched according to the content of the analyzed message in stages.

Meanwhile, any type of emergency disaster message can be applied to the present invention if the emergency disaster message which can be received by the device. For example, the emergency disaster message may be a message provided from a predetermined service server that provides emergency information. For example, when an emergency disaster situation (for example, a typhoon, a tsunami, an earthquake or the like) occurs, the emergency disaster message may be a message provided by a Cell Broadcast message Service (CBS), an Earthquake and Tsunami Warning Service (ETWS) or the like, which provides emergency disaster information, but the present invention is not limited thereto.

A type of the emergency disaster message may be a predetermined form of a message defined by a mobile communication standard or may be a short message. Further, the emergency disaster message may include at least one of piece of disaster type information, information related to a disaster time, information related to a distance to a disaster region, and information related to a disaster level.

Meanwhile, in the description of embodiments of the present invention below, the term "emergency-related mode" may be used as a meaning including a "warning mode" or an "emergency mode" according to a disaster risk state. According to another embodiment of the present invention, when the emergency-related mode is set as one mode, the "emergency-related mode" may refer to the "emergency mode.

Hereinafter, exemplary embodiments of the present disclosure will be described in detail with reference to the accompanying drawings in order that those skilled in the art to which the present disclosure pertains may readily carry out the present invention.

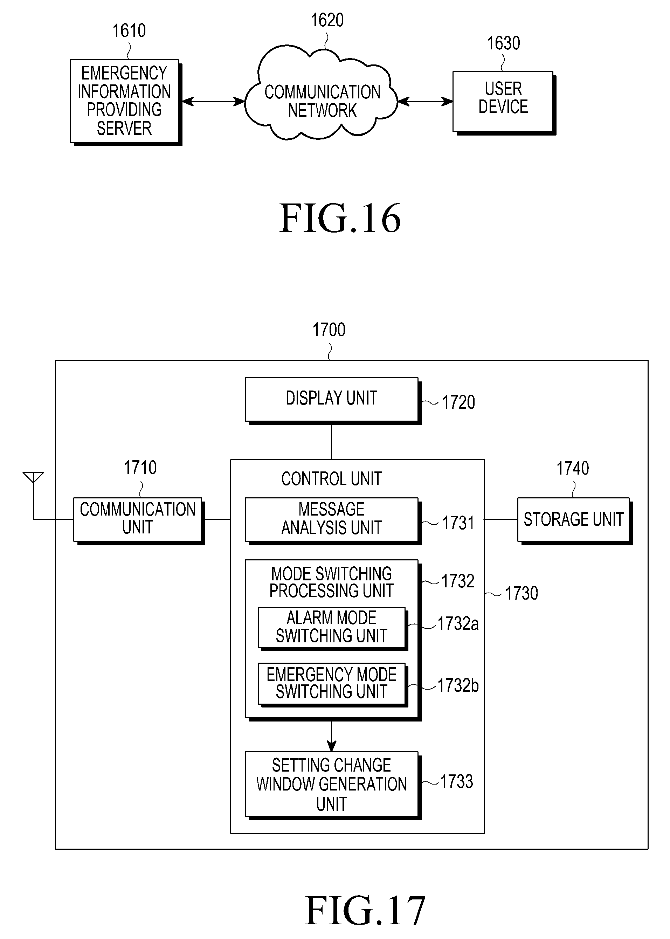

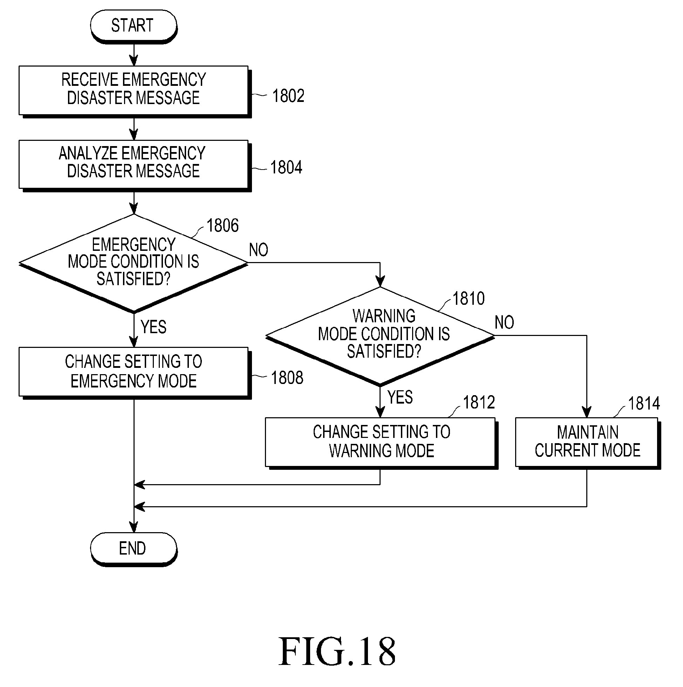

A system and a structure of an apparatus according to an embodiment of the present invention will be first described with reference to FIGs. 16 to 17, and then a procedure according to an embodiment of the present invention will be described in detail with reference to FIGs. 18 to 22.

Meanwhile, according to an embodiment of the present disclosure, a mode switching device that receives an emergency disaster message may be a predetermined electronic device including a communication unit and a display unit, and may be referred to as a camera, a portable device, a mobile terminal, a communication terminal, a portable communication terminal, a portable mobile terminal, or the like. For example, the electronic device may be a digital camera, a smart phone, a mobile phone, a game machine, a Television (TV), a display device, a head unit for a vehicle, a notebook computer, a laptop computer, a tablet computer, a Personal Media Player (PMP), a Personal Digital Assistant (PDA), a navigation device, an Automated Teller Machine (ATM) of a bank, a POS device of a shop or the like. Further, in the present invention, the electronic device may be a flexible device or a flexible display device.

An example of the electronic device is for the portable device (for example, a mobile phone, a smart phone, or the like), and some of the elements of the electronic device described below may be omitted or changed as necessary.

Hereinafter, structures of a system and an apparatus according to various embodiments of the present invention will be described with reference to FIGs. 16 and 17.

FIG. 16 illustrates an emergency disaster message transmission system according to an embodiment of the present invention. Referring to FIG. 16, the emergency disaster message transmission system according to the embodiment of the present invention may include an emergency information providing server 1610, a communication network 1620, and a user device 1630.

The emergency information providing server 1610 performs a function of generating an emergency disaster message and transmitting the generated emergency disaster message to each user device 1630 (for example, an electronic device). At this time, the transmitted emergency disaster message may include at least one of piece of disaster type information (for example, earthquake, tsunami or the like), information related to a disaster time, information related to a distance to a disaster region, and information related to a disaster level (for example, earthquake intensity, tsunami intensity or the like).

Further, the emergency disaster message type may be generated in a predetermined form of the message defined by a mobile communication standard and transmitted by a mobile communication standard protocol. For example, the emergency disaster message may be transmitted in a form of a short message.

As described above, the emergency disaster message transmitted by the emergency information providing server 1610 is transmitted to the user device 1630 through the communication network 1620. At this time, the user device 230 may be various types of electronic device as described above.

The communication network 1620 may be implemented regardless of an aspect of communication such as wired/wireless communication, and may be implemented by various communication networks including a Personal Area Network (PAN), a Local Area Network (LAN), a Metropolitan Area Network (MAN), a Wide Area Network (WAN) and the like. Further, the communication network 1620 may be a known World Wide Web (WWW), and may use a wireless transmission technology utilized for short distance communication such as Infrared Data Association (IrDA) or Bluetooth. In addition, the communication network 1620 may include a cable broadcasting communication network, a terrestrial broadcasting communication network, and a satellite broadcasting communication network for receiving a broadcasting signal by the user device 1630.

The user device 1630 having received the emergency disaster message from the emergency information providing server 1610 through the communication network 1620 analyzes the received emergency disaster message and change one or more settings of the user device 1630 based on the analyzed content according to an embodiment of the present invention. In the following description, the user device 230 will be described as an electronic device.

FIG. 17 is a block diagram illustrating a detailed structure of an electronic device according to an embodiment of the present invention. Referring to FIG. 17, an electronic device 1700 according to an embodiment of the present invention may include a communication unit 1710, a display unit 1720, a control unit 1730, and a storage unit 1740.

The communication unit 1710 receives an emergency disaster message from the emergency information providing server 1610 and provides the received emergency disaster message to the control unit 1730.

The control unit 1730 may be implemented to generate the received emergency disaster message as a pop up window through the display unit 1720 or may not display the received emergency disaster message according to another embodiment of the present invention. The control unit 1730 may include a message analysis unit 1731, a mode switching processing unit 1732 and a setting change window generation unit 1733.

The message analysis unit 1731 performs a function of analyzing the content contained in the emergency disaster message received through the communication unit 1710 and determining whether the emergency disaster message is urgent. The message analyzing method may use a method of parsing the message and extracting one or more keywords included in the message.

For example, since the emergency disaster message includes at least one piece of the disaster type information, the information related to the disaster time, the information related to the distance to the disaster region, and the information related to the disaster level as described above, the analysis can be more effectively performed by considering such a fact.

More specifically, for example, when the emergency disaster message includes the content such as "An earthquake with magnitude 5 took place in Suwon", information including "Suwon", "magnitude", and "earthquake" is extracted through a message analysis by the message analysis unit 1731.

Further, like the above message, when the content of a message contains the term " 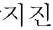 ", "earthquake" or " 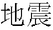 ", the message is highly likely to include the term " 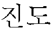 ", "intensity" or " 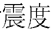 ". Accordingly, the term "intensity N" is searched for and extracted, and then it may be determined whether to set the emergency mode based on the extracted value of N.

In another example, when the emergency disaster message includes the content such as "A tsunami occurred in an area 20 km off the coast of Incheon", information including "Incheon", "off the coast", "20 km" and "tsunami" is extracted through a message analysis by the message analysis unit 1731. At this time, when the content of the message contains the term " 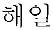 ", "tsunami", " 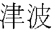 ", the message is highly likely to include a distance from a tsunami occurrence spot. Accordingly, the term "N km" is searched for and extracted, and then it may be determined whether to set the emergency mode based on the extracted value of N. Meanwhile, the above described examples are only examples of the present invention, and may be modified by any other methods.

As described above, the message analysis unit 1731 may analyze the received emergency disaster message to determine whether the emergency disaster message is urgent according to a disaster type or determine an urgent level.

The mode switching processing unit 1732 may switch a mode of the electronic device to a warning mode or an emergency mode according to the emergency level determined by the message analysis unit 1731. Meanwhile, the mode may be switched to one mode (for example, emergency mode) according to an embodiment of the present invention or may be switched to two or more modes such as the warning mode and the emergency mode according to another embodiment of the present invention.

When the mode is set to two or more modes, the settings according to the respective modes may be different, and each of a plurality of modes may be changed in stages according to the emergency level through the message analysis.

Hereinafter, although embodiments of the present invention will describe an example in which the mode is switched to the two modes such as the warning mode and the emergency mode in stages, the present invention is not limited thereto.

For example, when the emergency level is lower than a preset reference or the disaster level is not included in the message based on the message analysis, the mode may be set as the warning mode through a warning mode switching unit 1732a. Further, when the emergency level exceeds the preset reference or satisfies a particular condition in the warning mode, the mode may be set to be switched to the emergency mode by an emergency mode switching unit 1732b. Detailed embodiments thereof will be described below.

As described above, when the mode of the electronic device is switched by the mode switching processing unit 1732, a screen display setting of the display unit 1720 may be changed or various settings of the electronic device may be changed according to the corresponding setting mode.

For example, when the mode is switched to the warning mode, the warning mode switching unit 1732a may display a state of the warning mode of the electronic device in a flag form and then determine each situation to switch the mode to the emergency mode. In addition, the warning mode may be set to be switched to the emergency mode by a control of the user, and the usage of some applications may be limited in the warning mode. Detailed examples of the warning mode will be described below.

Meanwhile, when the mode is switched to the emergency mode, the emergency mode switching unit 1732b may restrict the remaining functions except for minimum functions necessary for the electronic device in order to minimize power consumed by the electronic device. For example, the emergency mode switching unit 1732b may switch other functions except for a function related to message reception to be in a disabled state. Further, the screen displayed on the display unit 1720 may be switched to a power saving mode in which minimum power is consumed.

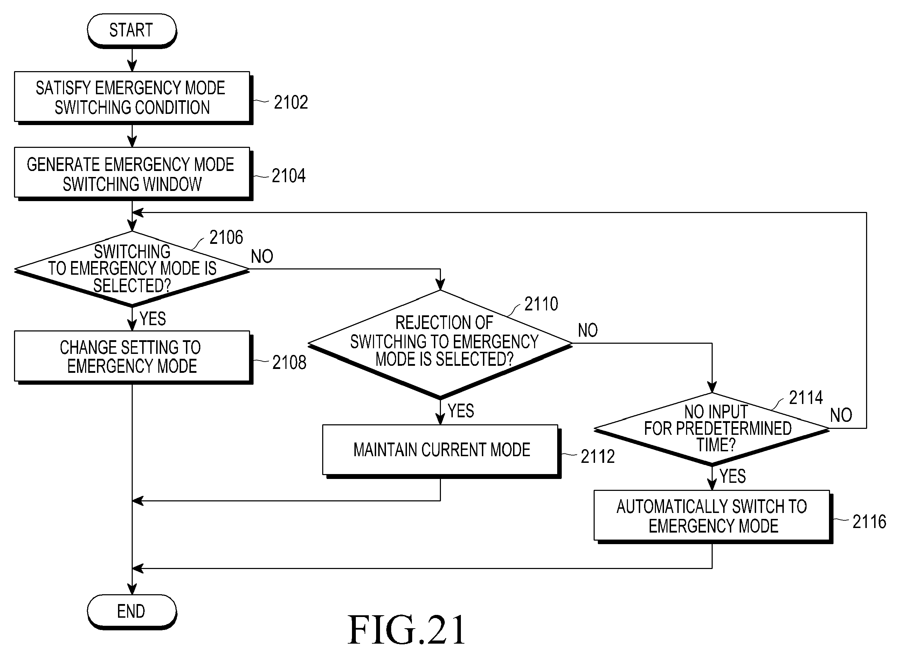

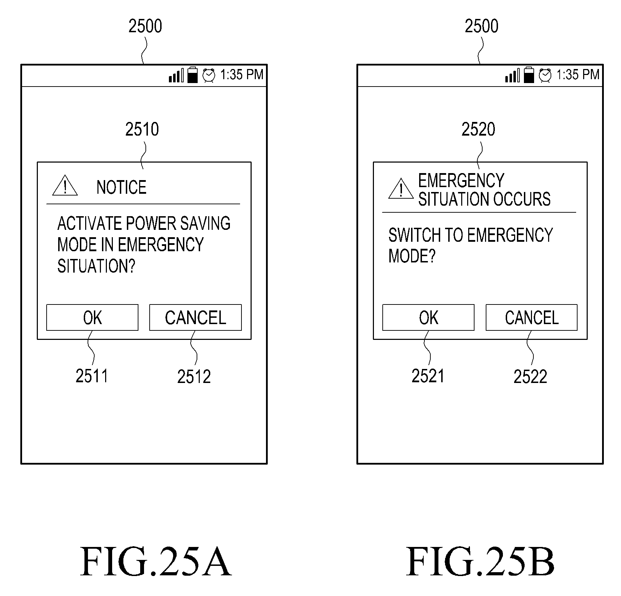

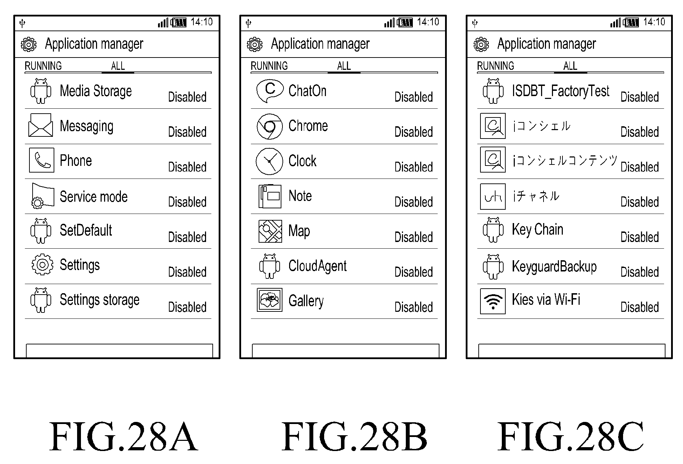

The setting change window generation unit 1733 may perform a function of generating a setting change window (for example, FIG. 25A) for setting a mode switching function according to the emergency situation or generating a function setting change window (for example, FIG. 21B) for switching each mode. According to an embodiment of the present invention, when the mode of the electronic device is switched to the emergency mode and thus applications installed in the electronic device are switched to be in the disabled state, the setting change window generation unit 1733 may generate a setting change window for switching a particular application to be in an enabled state by the user as illustrated in FIG. 28.

The storage unit 1740 may store information such as data and application data required for providing functions according to embodiments of the present invention, and also emergency mode condition information, current mode information, and received emergency disaster message information set according to an embodiment of the present invention.

Meanwhile, elements of the device 1700 are separately illustrated to indicate that they can be functionally and logically separated from each other, but the elements do not have to be separate elements or separate codes.

Further, in this specification, each function unit may refer to a functional or structural combination of hardware for realizing the technical idea of the present invention and software for driving the hardware. For example, each function unit may refer to a logical unit of a predetermined code or a hardware resource for executing the predetermined code, and it may be easily inferred by those skilled in the art that the function unit does not necessarily refer to a physically connected code or one type of hardware.

Hereafter, mode switching processes according to various embodiments of the present invention will be described in detail with reference to FIGs. 18 to 22.

FIG. 18 is a flowchart illustrating a mode switching process by an emergency disaster message according to an embodiment of the present invention. Referring to FIG. 18, when the electronic device receives an emergency disaster message in step 1802, the electronic device analyzes the received emergency disaster message in step 1804.

When the emergency disaster message satisfies a condition for switching to the emergency mode based on a result of the analysis in step 1806-Y, the setting of the electronic device is changed to the emergency mode in step 1808. At this time, the electronic device may be implemented to automatically switch to the emergency mode according to the satisfaction of the condition, or may be implemented to generate a pop up window for asking about whether to switch to the emergency mode and to switch to the emergency mode based on a selection by the user according to other embodiments described below.

Meanwhile, when the emergency disaster message satisfies a condition for switching to the warning mode in step 1810-Y, the setting of the electronic device is changed to the warning mode in step 1812. At this time, the electronic device may be implemented to automatically switch to the warning mode according to the satisfaction of the condition, or may be implemented to generate a pop up window for asking about whether to switch to the warning mode and then switch to the warning mode based on a selection by the user according to other embodiments described below.

Meanwhile, when the emergency disaster message does not satisfy both the emergency mode condition and the warning mode condition based on the result of the analysis, the electronic device may maintain a current mode in step 1814.

The emergency mode switching condition and the warning mode switching condition may be set in various ways. For example, when the emergency disaster message is received, the electronic device may be configured to automatically switch to the warning mode by default. When a danger degree exceeds a preset reference through an analysis of the message, the electronic device may be configured to further switch to the emergency mode. Further, in another example, when the emergency disaster message is received, the electronic device may be configured to switch to the warning mode or the emergency mode according to a danger degree through an analysis of the message.

As described above, according to the embodiment of the present invention, if the corresponding mode switching condition is satisfied, the electronic device may be configured to automatically switch or configured to generate the popup window and switch to the corresponding mode based on the user's selection. According to another embodiment described below, when there is no user's input for a predetermined time after the pop up window is generated, the electronic device may be configured to automatically switch to the corresponding mode.

Meanwhile, although FIG. 18 illustrates that the electronic device can switch to the two modes according to the analysis of the received emergency disaster message, the electronic device may be implemented to switch to one mode (for example, warning mode) according to other embodiments of the present invention as described above, or to three or more modes according to the emergency level. Accordingly, the electronic device may apply the change in the function setting of the electronic device in stages according to each mode.

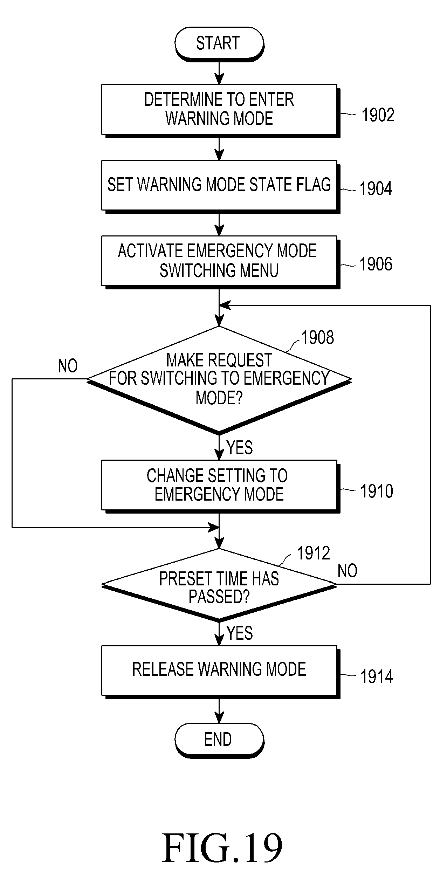

FIG. 19 is a flowchart illustrating an emergency mode switching process according to an embodiment of the present invention. Referring to FIG. 19, when the warning mode switching condition is satisfied as illustrated in FIG. 18 and thus it is determined to enter the warning mode in step 1902, the electronic device may identify that a current state of the electronic device is the warning mode by setting an warning mode state flag in step 1904. Further, the electronic device may change the setting of one or more preset functions among the functions of the electronic device according to the set warning mode. For example, the electronic device may apply in advance some of the function settings to be applied to the emergency mode or may reduce a level of the function settings to be applied to the emergency mode and then apply the reduced function settings (for example, the electronic device can adjust brightness of a background screen of a touch screen in stages). Further, according to another embodiment, the electronic device may display the warning mode by setting the warning mode state flag and may not change other function settings.

As described above, when the mode is switched to the warning mode, the electronic device may activate a function of manually switching the mode to the emergency mode. Accordingly, the electronic device may activate an emergency mode switching menu in step 1906, and make a request for switching to the emergency mode through the corresponding emergency mode switching menu in step 1908.

Therefore, the electronic device may switch the mode of the electronic device to the emergency mode according to the emergency mode switching request by the user in step 1910. At this time, when there is no switching to the emergency mode or no particular event (for example, reception of another emergency disaster message) for a predetermined time after entering the warning mode, the electronic device may release the warning mode automatically or according to a user's input in step 1914.

Further, according to another embodiment of the present invention, when another emergency disaster message is received, emergency disaster messages are received by a predetermined number of times after entering the warning mode, or when an warning mode entering condition is satisfied by a predetermined number of times, the electronic device may be implemented to switch to the emergency mode.

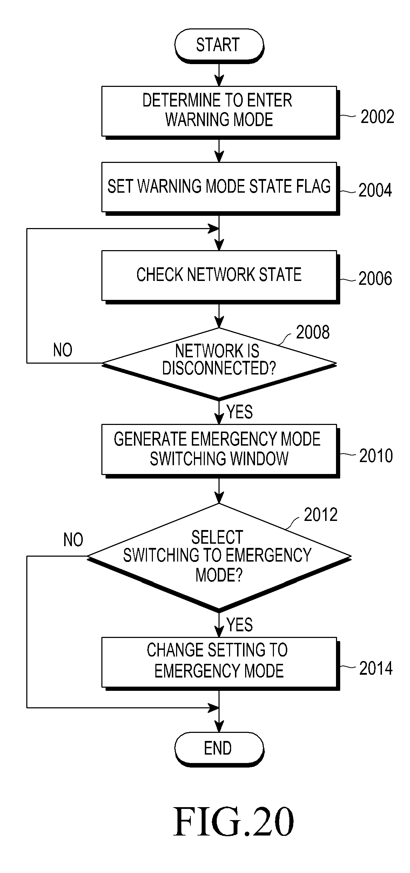

FIG. 20 is a flowchart illustrating the emergency mode switching process according to another embodiment of the present invention. Referring to FIG. 20, when the warning mode switching condition is satisfied as illustrated in FIG. 18 and thus it is determined to enter the warning mode in step 2002, the electronic device may identify that a current state of the electronic device is the warning mode by setting a warning mode state flag in step 2004. Further, the electronic device may change the setting of one or more preset functions among the functions of the electronic device according to the set warning mode. For example, the electronic device may apply in advance some of the function settings to be applied to the emergency mode or may reduce a level of the function settings to be applied to the emergency mode and then apply the reduced function settings (for example, the electronic device can adjust brightness of a background screen of a touch screen in stages). Further, according to another embodiment, the electronic device may display the warning mode by setting the warning mode state flag may not change other function settings.

As described above, after switching to the warning mode, the electronic device may not additionally receive the emergency disaster message according to various emergency disaster situations. For example, after receiving the emergency disaster message, the electronic device may not receive an additional emergency disaster message since a communication network is disconnected due to a sudden disaster situation. In this case, even though the mode should be switched to the emergency mode in principle, the electronic device may not perform the mode switching since the message is not received. According to another embodiment of the present invention, when the network is disconnected after entering the warning mode, the electronic device may be implemented to automatically switch to the emergency mode.

For example, when, after entering the warning mode, the electronic device may check a network state in step 2006 and, when a network disconnection situation occurs (for example, communication with a base station is not possible) in step 2008, may automatically switch to the emergency mode or generate an emergency mode switching window for switching to the emergency mode in step 2010.

When the user selects the switching to the emergency mode through the emergency mode switching window in step 2012, the setting of the electronic device may be changed to the emergency mode in step 2014. As described above, apart from the emergency mode setting according to the analysis of the received emergency disaster message, when a particular condition is satisfied in the warning mode according to another embodiment of the present invention, the electronic device may switch to the emergency mode without the reception of the additional emergency disaster message.

Accordingly, for example, when the base station is damaged or destroyed due to a sudden disaster and thus the communication is not possible before the message for the switching to the emergency mode is received, the electronic device may determine that the current situation is in the emergency mode and automatically switch to the emergency mode. Therefore, even though the base station is restored after a long time, the electronic device can last for a long time, thereby more effectively providing a disaster aid.

FIG. 21 is a flowchart illustrating the emergency mode switching process according to yet another embodiment of the present invention. Referring to FIG. 21, as described above, when the emergency mode switching condition is satisfied in step 2102 according to various embodiments of the present invention, the electronic device may be automatically switched to the emergency mode or may generate an emergency mode switching window in step 2104 to manually switch to the emergency mode as illustrated in FIG. 25B.

Accordingly, when the user selects the switching to the emergency mode through the emergency mode switching window (ok) in step 2106, the setting of the electronic device may be changed to the emergency mode in step 2108. In contrast, when the switching to the emergency mode is rejected (cancel), in step 2110, the electronic device maintains a current mode (for example, warning mode or normal mode) in step 2112.

Meanwhile, when there is no user input for a predetermined time with no selection or rejection of the switching to the emergency mode in step 2114, the electronic device may be configured to automatically switch to the emergency mode in step 2116. For example, when the user cannot identify the screen of the electronic device even though the emergency mode switching condition is satisfied, it is highly likely to be an emergency situation. Accordingly, when a non-input state lasts for a predetermined time, the electronic device may be implemented to automatically switch to the emergency mode as described above.

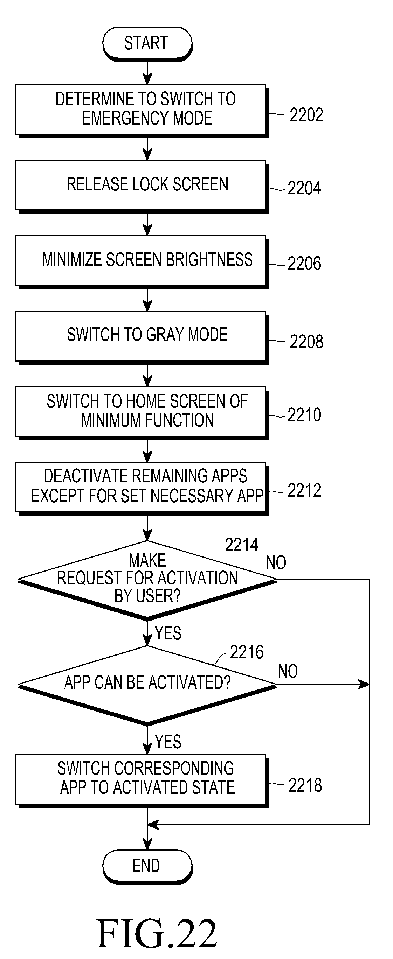

FIG. 22 is a flowchart illustrating a setting process performed when switching to an emergency mode is made according to an embodiment of the present invention. Referring to FIG. 22, when the switching to the emergency mode is determined according to the embodiments of FIGs. 18 to 21, it is possible to minimize power consumption by changing the setting of one or more functions among the functions of the electronic device.

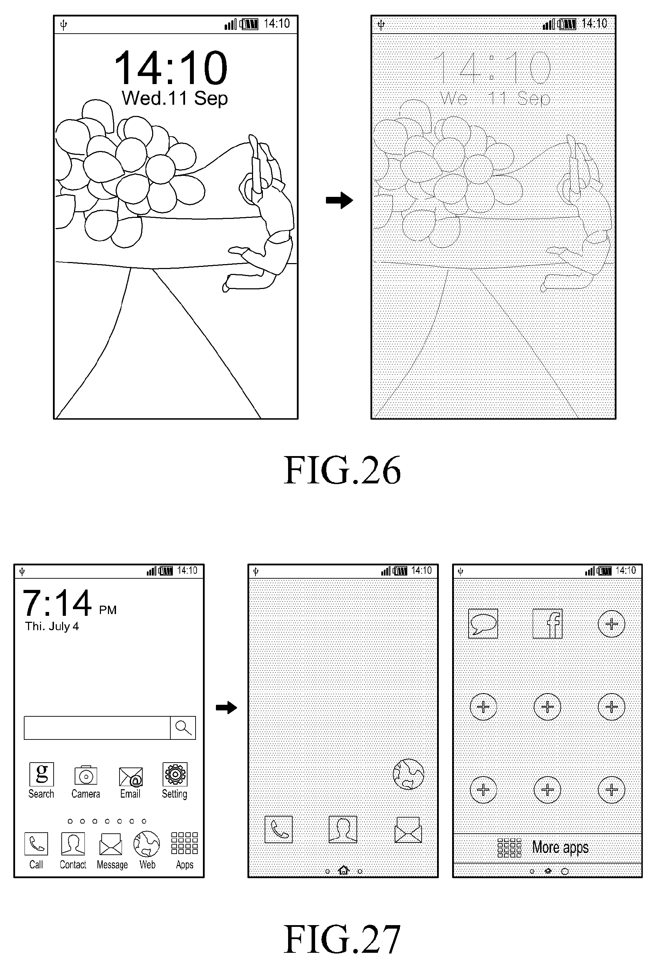

For example, the electronic device may release a lock screen in step 2204, and minimize screen brightness of the display unit of the electronic device in step 2206. Further, as illustrated in FIG. 26, the electronic device may switch the screen of the display unit of the electronic device to a gray mode in step 2208.

In addition, as illustrated in FIG. 27, the electronic device may be implemented to use only a minimum function by switching a home screen of the electronic device to a home screen of the minimum function in step 2210. At this time, the electronic device may minimize power consumption by deactivating the remaining applications except for preset essential applications (for example, a phone call app, a message reception app, a web browser, and the like).

Meanwhile, even though all the applications except for the preset essential applications are deactivated as described above, the electronic device may be implemented such that the user may manually activate a particular application among the deactivated applications according to an embodiment of the present invention.

Accordingly, as illustrated in FIG. 28, when a request is made to activate one or more applications among deactivated applications displayed as "disabled" in an application list in step 2214, the electronic device determines whether the corresponding requested application is an application which can be activated in the emergency mode in step 2216. When the application of which the activation is requested by the user is the application which can be activated in the emergency mode based on a result of the determination, the corresponding application is switched to an activated state in step 2218. In contrast, when the application of which the activation is requested by the user is not the application which can be activated in the emergency mode based on the result of the determination, the corresponding application is maintained in the deactivated state. At this time, the deactivated state of the application may be processed to have the same effect generated when the corresponding application is removed. Accordingly, for example, power consumption generated by the operation of the corresponding application in a background of the electronic device may be prevented.

Meanwhile, whether the application can be activated in the emergency mode may be determined in consideration of a degree of the power consumption of the corresponding application. For example, an application having large power consumption such as a game may be implemented to not be activated even by a user's request, and an application frequently used and having small power consumption such as a messenger may be implemented to switch to the deactivated state by default and to switch to the activated state according to a user's selection.

Further, according to another embodiment of the present invention, it is possible to minimize power consumption by allowing the electronic device to not use functions related to various types of communication (for example, network-related functions).

For example, signal reception for a network-related function such as Network Identity and Time Zone (Nitz) may be released in the emergency mode. Accordingly, the power consumption can be reduced by not updating network time information from the communication network.

Further, in the emergency mode, the use of mobile data may be limited by removing a mobile data logical path and the corresponding related application may be notified of a disconnected state.

Accordingly, for example, the electronic device may be implemented to not use a push service of the messenger application and, when the electronic device becomes in a Screen On state, implemented to notify of message reception information.

Further, in the emergency mode, registration of an alarm manager (Alarm Manager) 3rd party application service may be limited. Accordingly, the use of a background service of the corresponding application may be limited.

In the emergency mode, the electronic device may be implemented to remain in a sleep state without waking up a CPU of the electronic device according to an embodiment of the present invention.

Meanwhile, one or more of the methods of restricting various functions to reduce the power consumption may be selectively applied in the emergency mode according to the embodiment of the present invention as described above, and methods other than the above described methods which can minimize the power consumption of the electronic device may be applied to the emergency mode of the present invention.

Meanwhile, methods of displaying states of the electronic device according to various embodiments of the present invention may be implemented in a form of a program command which can be executed through various computer means and be recorded in a computer-readable medium. The computer-readable medium may include a program command, a data file, and a data structure alone or a combination thereof. The program command recorded in the medium may be specially designed and configured for the present invention, or may be known to those skilled in computer software fields to be used. Examples of the computer-readable recording medium include magnetic media such as hard disks, floppy disks and magnetic tapes, optical media such as a Compact Disc Read-Only Memory (CD-ROM) and a Digital Versatile Disc (DVD), magneto-optical media such as floppy disks, and hardware devices such as a Read-Only Memory (ROM), a Random Access Memory (RAM) and a flash memory, which are specially configured to store and perform the program command. Examples of the program command include a machine language code generated by a compiler and a high-level language code executable by a computer through an interpreter and the like. The hardware devices may be configured to operate as one or more software modules to perform the operations of the present invention, and vice versa.

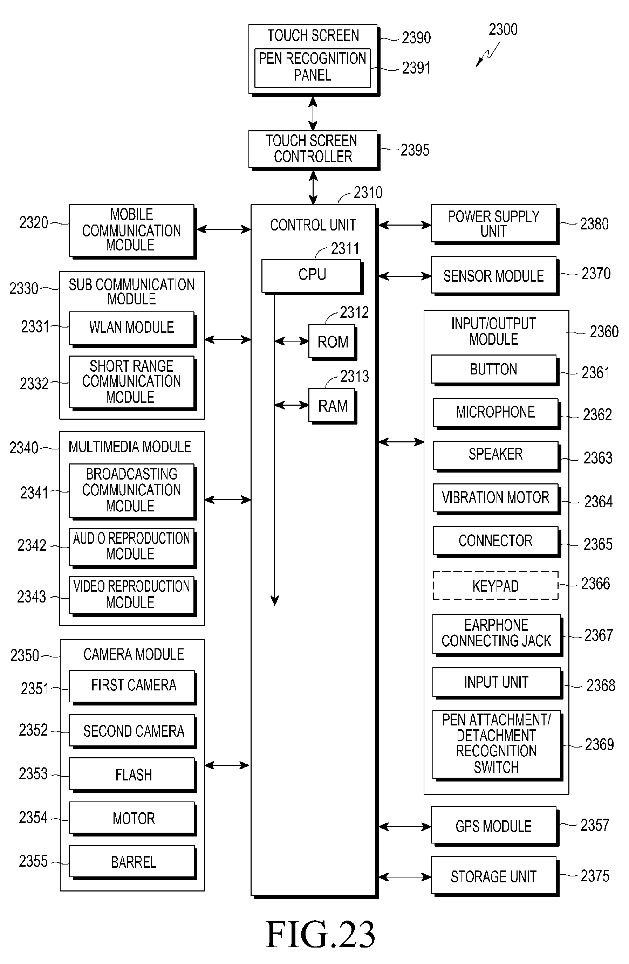

Further, as described above, setting changes of various functions (for example, function restriction) in the emergency mode may be selected from various functions of the electronic device according to an embodiment of the present invention. Hereinafter, an example of the electronic device having various functions will be described in detail with reference to FIG. 23, and the example of the electronic device having such a configuration may be a smart phone.

FIG. 23 is a block diagram illustrating a detailed structure of an electronic device according to an embodiment of the present invention. Referring to FIG. 23, an electronic device 2300 may include one or more of a control unit 2310, a mobile communication module 2320, a multimedia module 2340, a camera module 2350, an input/output module 2360, a sensor module 2370, a state indication unit 2371, a storage unit 2375, a power supply unit 2380, and a touch screen 2390.

More specifically, the electronic device 2300 may be connected to an external electronic device (not shown) by using at least one of the mobile communication module 2320, a connector 2365, and an earphone connecting jack 2367. In addition, the electronic device 2300 may be connected to another portable device or another electronic device, for example, one of a mobile phone, a smart phone, a tablet PC, a desktop PC, and a server through a wire or wirelessly.

The communication module 2320 may include the mobile communication module 2320, a sub communication module 2330, and a broadcasting communication module 2341. The sub communication module 2330 may include at least one of a WLAN module 2331 and a short range communication module 2332. The multimedia module 2340 may include the broadcasting communication module 2341, an audio reproduction module 2342, and a video reproduction module 2343. The camera module 2350 may include at least one of a first camera 2351 and a second camera 2352. Further, the camera module 2350 may further include a flash 2353, a motor 2354, and a barrel 2355. The input/output module 2360 may include at least one of a button 2361, a microphone 2362, a speaker 2363, a vibration device 2364, the connector 2365, and a keypad 2366.

The control unit 2310 may include a CPU 2311, a Read Only Memory (ROM) 2312 that stores a control program for controlling the electronic device 2300, and a Random Access Memory (RAM) 2313 that is used as a storage area for storing a signal or data input from the outside of the electronic device 2300 or for work performed in the electronic device 2300. The CPU 2311 may include a single core, a dual core, a triple core, or a quadruple core. The CPU 2311, the ROM 2312, and the RAM 2313 may be mutually connected to each other through an internal bus.

The control unit 2310 may control at least one of the mobile communication module 2320, the multimedia module 2340, the camera module 2350, the input/output module 2360, the sensor module 2370, the storage unit 2375, the power supply unit 2380, the touch screen 2390, and a touch screen controller 2395.

At this time, the control unit 2310 may determine whether to switch to the emergency mode by analyzing the emergency disaster message received through the mobile communication module 2320 according to an embodiment of the present invention.

Meanwhile, when the control unit 2310 determines to switch to the emergency mode or the warning mode, the control unit 2310 may minimize power consumption by controlling each function unit controlled by the control unit 2310 or functions of the modules.

Further, the control unit 2310 may detect a user input event such as a hovering event as an input unit 2368 approaches the touch screen 2390 or is located close to the touch screen 2390. In addition, the control unit 2310 may detect various user inputs received through the camera module 2350, the input/output module 2360, and the sensor module 2370 as well as the touch screen 2390. The user input may include various types of information input into the device 2300 such as a gesture, a voice, a pupil action, an iris recognition, and a bio signal of the user as well as the touch. The control unit 2310 may control a predetermined operation or function corresponding to the detected user's input to be performed within the device 2300. Further, the control unit 2310 may output a control signal to the input unit 2368 or the vibration device 2364. The control signal may include information on a vibration pattern and the input unit 2368 or the vibration device 2364 may generate a vibration according to the vibration pattern.

The electronic device 2300 may include at least one of the mobile communication module 2321, the WLAN module 2331, and the short range communication module 2332 according to the performance thereof.

The mobile communication module 2321 may connect the electronic device 2300 to an external device through mobile communication by using at least one antenna or a plurality of antennas (not shown) according to a control of the control unit 2310. The mobile communication module 2321 may transmit/receive a radio signal for a voice call, a video call, a Short Message Service (SMS), or a Multimedia Message Service (MMS) to/from a mobile phone (not shown), a smart phone (not shown), a tablet PC, or another electronic device (not shown) having a phone number input into the electronic device 2300. Further, according to an embodiment of the present invention, the emergency disaster message transmitted from the emergency information providing server may be received through the mobile communication module 2321.

The sub communication module 2330 may include at least one of the WLAN module 2331 and the short distance communication module 2332. For example, the sub-communication module 2331 may include only the WLAN module 2332, only the short range communication module 2331, or both the WLAN module 2332 and the short range communication module 132.

The WLAN module 2331 may be connected to the Internet in a place where a wireless Access Point (AP) is installed according to a control of the control unit 2310. The WLAN module 2331 may support a WLAN standard (IEEE802.11x) of the Institute of Electrical and Electronics Engineers (IEEE). The short range communication module 2332 may wirelessly perform short range communication between the electronic device 2300 and an external electronic device according to a control of the control unit 110. A short range communication scheme may include Bluetooth, Infrared Data Association (IrDA) communication, WiFi-Direct communication, Near Field Communication (NFC) and the like.

The broadcasting communication module 2341 may receive a broadcasting signal (for example, a TV broadcasting signal, a radio broadcasting signal, or a data broadcasting signal) and broadcasting supplement information (for example, Electric Program Guide: EPG or Electric Service Guide: ESG) output from a broadcasting station through a broadcasting communication antenna (not shown) according to a control of the control unit 2310

The multimedia module 2340 may include the audio reproduction module 2342 or the video reproduction module 2343. The audio reproduction module 2342 may reproduce a digital audio file (for example, a file having a file extension of mp3, wma, ogg, or wav) stored or received in the storage unit 2375 according to a control of the control unit 2310. The video reproduction module 2343 may reproduce a digital video file (for example, a file having a file extension of mpeg, mpg, mp4, avi, mov, or mkv) stored or received according to a control of the control unit 2310. The multimedia module 2340 may be integrated in the control unit 2310.

The camera module 2350 may include at least one of the first camera 2351 and the second camera 2352 that photograph a still image, a video, or a panorama picture according to a control of the control unit 2310. Further, the camera module 2350 may include at least one of the barrel 2355 for performing a zoom-in/out for photographing a subject, the motor 2354 for controlling a movement of the barrel 2355, and the flash 2353 for providing an auxiliary light source required for photographing the subject. The first camera 2351 may be disposed on a front surface of the electronic device 2300, and the second camera 152 may be disposed on a rear surface of the electronic device 2300.

The input/output module 2360 may include at least one of at least one button 2361, at least one microphone 2362, at least one speaker 2363, at least one vibration device 2364, the connector 2365, the keypad 2366, the earphone connection jack 2367, and the input unit 2368. The input/output module 2360 may provide a mouse, a trackball, a joystick, or a cursor control such as cursor direction keys to control a movement of a cursor on the touch screen 2390.

The button 2361 may be formed on a front surface, a side surface, or a rear surface the housing (or case) of the electronic device 2300, and may include at least one of a power/lock button, a volume button, a menu button, a home button, a back button, and a search button. The microphone 2362 may receive a voice or a sound to generate an electrical signal according to a control of the control unit 2310. The speaker 2363 may output sounds corresponding to various signals or data (for example, wireless data, broadcasting data, digital audio data, digital video data and the like) to the outside of the electronic device 2300 according to a control of the control unit 2310. The speaker 2363 may output a sound (for example, button tone corresponding to phone communication, ringing tone, and a voice of another user) corresponding to a function performed by the electronic device 2300. One or more speakers 2363 may be formed at a suitable position or positions of the housing of the electronic device 2300.

The vibration device 2364 may convert an electrical signal to a mechanical vibration according to a control of the control unit 2310. For example, when the electronic device 100 in a vibration mode receives a voice call from another device (not shown), the vibration motor 2364 operates. One or a plurality of vibration devices 2364 may be formed within the housing of the electronic device 2300. The vibration device 2364 may operate in accordance with a user's input through the touch screen 2390.

The connector 2365 may be used as an interface for connecting the portable electronic device 2300 with an external electronic device or a power source (not shown). The control unit 2310 may transmit or receive data stored in the storage unit 2375 of the electronic device 2300 to or from an external electronic device through a wired cable connected to the connector 2365. The electronic device 2300 may receive power from a power source through the wired cable connected to the connector 2365 or charge a battery (not shown) by using the power source.

The keypad 2366 may receive a key input from the user to control the electronic device 2300. The keypad 2366 may include a physical keypad (not shown) formed in the electronic device 2300 or a virtual keypad (not shown) displayed on the touch screen 2390. The physical keypad (not shown) formed in the electronic device 2300 may be excluded according to the performance or a structure of the electronic device 2300. Earphones (not shown) may be inserted into the earphone connecting jack 2367 to be connected to the electronic device 2300.

The input unit 2368 may be inserted into the inside of the electronic device 2300 and withdrawn or separated from the electronic device 2300 when being used. An attachment/detachment recognition switch 2368, which operates in accordance with an installation and attachment/detachment of the input unit 2368, is located in one area within the electronic device 2300 into which the input unit 2369 is inserted, and the attachment/detachment recognition switch 2369 may output signals corresponding to the installation and separation of the input unit 2368 to the control unit 2310. The attachment/detachment recognition switch 2369 may be configured to directly/indirectly contact the input unit 2368 when the input unit 2368 is mounted. Accordingly, the attachment/detachment recognition switch 2369 may generate the signal corresponding to the installation or the separation of the input unit 2368 (that is, signal informing of the installation or the separation of the input unit 2368) and output the generated signal to the control unit 2310 based on whether the attachment/detachment recognition switch 2368 contacts the input unit 2368.

The sensor module 2370 includes at least one sensor for detecting a state of the electronic device 2300. For example, the sensor module 2370 may include at least one of a proximity sensor for detecting whether the user approaches the electronic device 2300, an illuminance sensor (not shown) for detecting an amount of ambient light of the electronic device 2300, a motion sensor (not shown) for detecting a motion (for example, rotation, acceleration, or vibration of the electronic device 2300) of the electronic device 2300, a geo-magnetic sensor for detecting a point of the compass by using the Earth's magnetic field, a gravity sensor for detecting a gravity action direction, an altimeter for measuring an atmospheric pressure to detect an altitude, and a GPS module 2357.

The GPS module 2357 may receive radio waves from a plurality of GPS satellites (not shown) in Earth's orbit and calculate a position of the electronic device 2300 by using Time of Arrival from the GPS satellites to the electronic device 2300.

The storage unit 2375 may store a signal or data input/output according to the operation of the communication module 2320, the multimedia module 2340, the camera module 2350, the input/output module 2360, the sensor module 2370, or the touch screen 2390. Further, according to an embodiment of the present invention, the storage unit 2375 may store various piece of state information and setting information on the electronic device 2300.

The storage unit 2375 may store a control program and applications for controlling the electronic device 2300 or the control unit 2310. One of the control program and the applications may analyze the received emergency message according to an embodiment of the present invention, change the setting to the corresponding mode according to the analysis of the message, and control to change preset functions according to each mode.

The term "storage unit" is used as a term which refers to a predetermined data storage device such as the storage unit 2375, the ROM 2312 or the RAM 2313 within the control unit 2310, or a memory card (for example, an SD card or a memory stick) installed in the electronic device 2300. The storage unit 2375 may also include a non-volatile memory, a volatile memory, a Hard Disk Drive (HDD), or a Solid State Drive (SSD).

Further, the storage unit 2375 may store applications having various functions such as a navigation function, a video call function, a game function, and a time based alarm function, images for providing a Graphical User Interface (GUI) related to the applications, databases or data related to a method of processing user information, a document, and a touch input, background images (a menu screen, an idle screen or the like) or operating programs required for driving the electronic device 2300, and images photographed by the camera module 2350.

The storage unit 2375 is a machine (for example, computer)-readable medium. The term "machine-readable medium" may be defined as a medium capable of providing data to the machine so that the machine performs a specific function. The storage unit 2375 may include a non-volatile medium and a volatile medium. All of these media may be tangible such that the commands transferred by the media can be detected by a physical instrument such as the machine reading the commands.

The machine-readable medium includes at least one of a floppy disk, a flexible disk, a hard disk, a magnetic tape, a Compact Disc Read-Only Memory (CD-ROM), an optical disk, a punch card, a paper tape, a Random Access Memory (RAM), a Programmable Read-Only Memory (PROM), an Erasable PROM (EPROM), a flash-EPROM, and an embedded Multi Media Card (eMMC), but is not limited thereto.

The power supply unit 2380 may supply power to one or a plurality of batteries arranged at the housing of the electronic device 2300 according to a control of the control unit 2310. The one or the plurality of batteries supply power to the electronic device 2300. Further, the power supply unit 2380 may supply power input from an external power source through a wired cable connected to the connector 2365 to the electronic device 2300. In addition, the power supply unit 2380 may supply power wirelessly input from the external power source through a wireless charging technology to the electronic device 2300.

The electronic device 2300 may include at least one touch screen 2390 providing user graphical interfaces corresponding to various services (for example, a phone call, data transmission, broadcasting, and photography) to the user. The touch screen 2390 may output an analog signal corresponding to at least one user input which is input to the user graphical interface to the touch screen controller 2395.

The touch screen 2390 may receive at least one user input through a user's body (for example, fingers including a thumb) or the input unit 2368 (for example, a stylus pen or an electronic pen). The touch screen 2390 may be implemented in a resistive type, a capacitive type, an infrared type, an acoustic wave type, or a combination thereof.

Further, the touch screen 2390 may include at least two touch panels which can detect touches or approaches of the finger and the input unit 2368, respectively, in order to receive inputs of the finger and the input unit 2368, respectively. The two or more touch panels provide different output values to the touch screen controller 2395. Then, the touch screen controller 2395 may recognize the different values input to the two or more touch panels to distinguish whether the input from the touch screen 2390 is an input by the finger or an input by the input unit 2368.

In addition, the touch is not limited to a touch between the touch screen 2390 and the user's body or touchable input means, but includes a non-contact (for example, a case where an interval between the touch screen 2390 and the user's body or touchable input means is 1 mm or shorter). The detectable interval of the touch screen 2390 may be changed according to the performance or structure of the electronic device 2300.

The touch screen controller 2395 converts an analog signal received from the touch screen 2390 into a digital signal and transmits the converted digital signal to the control unit 2310. The control unit 2310 may control the touch screen 2390 by using the digital signal received from the touch screen controller 2395. The touch screen controller 2395 may identify a hovering interval or distance as well as a position of the user input by detecting a value (for example, a current value or the like) output through the touch screen 2390, and convert the identified distance value to a digital signal (for example, a Z coordinate), and provide the converted digital signal to the control unit 2310. Further, the touch screen controller 2395 may detect a pressure applied to the touch screen 2390 by the user input means by detecting the value (for example, the current value or the like) output through the touch screen 2390, convert the identified pressure value to a digital signal, and then provide the converted digital signal to the control unit 2310.

Meanwhile, according to an embodiment of the present invention, the control unit 2310 may be implemented to display a screen with a sleep mode which can minimize power consumption by controlling the touch screen 2390.

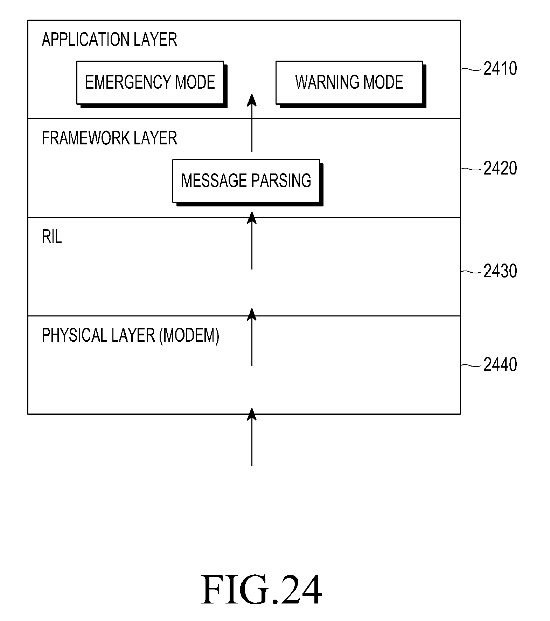

FIG. 24 illustrates layers for processing a received emergency disaster message according to an embodiment of the present invention. Referring to FIG. 24, with respect to the emergency disaster message received through the antenna, a physical layer 2440 performs physical layer signal processing and a Radio Interface Layer (RIL) 2430 performs radio signal processing.

Meanwhile, according to the embodiment of the present invention, a framework layer 2420 may perform a message analysis of the received emergency disaster message. For example, it may be determined whether to switch to an emergency related mode by extracting words included in the message through a syntax analysis (message parsing) and analyzing a correlation between the words in association with a disaster.

According to the message parsing by the framework layer 2420, the application layer 2410 switches the mode to the warning mode or the emergency mode according to an embodiment of the present invention and performs corresponding preset functions.

Hereinafter, various embodiments implemented to set an emergency situation in the electronic device will be described with reference to FIGs. 25 to 28.

FIG. 25A illustrates a screen configuration for setting an emergency situation in an electronic device according to an embodiment of the present invention. Referring to FIG. 25A, the user may set to allow the mode switching for the emergency situation in the electronic device. Accordingly, when a display unit 2500 of the electronic device displays whether to set the mode through a mode setting window 2510 for setting the emergency situation, the user may select a corresponding function. For example, when the user selects "yes (OK) 2511, a mode switching function may be provided when the emergency disaster message is received according to embodiments of the present invention. In contrast, when the user selects "cancel" 2512, the corresponding function is not used and the mode switching may not be performed even though the emergency disaster message is received.

FIG. 25B illustrates a screen configuration of an emergency mode switching window in an electronic device according to an embodiment of the present invention. Referring to FIG. 25B, the user may manually set the emergency mode in the electronic device. For example, when the emergency mode switching condition is satisfied as described above, the user may directly switch the mode as illustrated in FIG. 25B, or the user may directly generate the window through a menu for the window generation in the warning mode.

Accordingly, when the display unit 2500 of the electronic device displays whether to switch to the emergency mode through a setting window 2520 for setting the emergency mode, the user may directly manually select an emergency mode switching function. For example, when the user selects "OK" 2521, the electronic device may directly switch to the emergency mode according to embodiments of the present invention and thus set various functions according to the set emergency mode. In contrast, when the user selects "cancel" 2522, the electronic device may not switch to the emergency mode even though the emergency mode condition is satisfied. Accordingly, the previous mode (for example, warning mode or normal mode) is maintained.

Meanwhile, as described through FIG. 21, when there is no selection in the emergency mode setting window 2520 for a predetermined time, the electronic device may consider this situation as the emergency situation and automatically switch to the emergency mode according to another embodiment of the present invention.

FIG. 26 illustrates a screen configuration based on a setting of the emergency situation in the electronic device according to an embodiment of the present invention. Referring to FIG. 26, when the electronic device switches to the warning mode or the emergency mode according to an embodiment of the present invention, it is possible to reduce power consumption by switching the screen of the display unit of the electronic device to a black and white screen and reducing a resolution or brightness of the screen.

FIG. 27 illustrates an example where the electronic device changes a home screen configuration according to an emergency mode setting according to an embodiment of the present invention. Referring to FIG. 27, when the electronic device switches to the emergency mode according to the embodiment of the present invention as described above, the electronic device may provide a home screen dedicated for the emergency mode in which all applications or functions except for a minimum function are removed from the home screen. Accordingly, the power consumption can be minimized in the emergency mode.

Further, as illustrated in a right side of FIG. 27, the remaining installed applications except for a preset minimum application may be deactivated in the application screen. At this time, when the user desires to additionally activate the application according to another embodiment of the present invention as described above, an activation/deactivation setting of each application may be changed in the application setting screen as illustrated in FIG. 28.

FIG. 28 illustrates a deactivated application according to an emergency mode setting in the electronic device according to an embodiment of the present invention. Referring to FIG. 28, among applications displayed as deactivated applications on the application setting screen, an application which the user desires to use may be activated. However, as described above, a particular application may not be activated in the emergency mode in order to minimize power consumption as described above.

As described above, the present invention has been described by particular matters such as detailed elements, limited embodiments, and drawings, but they are provided only to assist general understanding of the present invention, and the present invention is not limited by the embodiments and may be variously modified and changed by those skilled in the art from such disclosure.

Accordingly, the technical idea of the present invention should not be defined by the aforementioned embodiments, and not only the following claims but also all of the equivalents to the claims or equivalent modifications may be included in the range of the technical idea of the present invention.

## Claims

1. A method of performing a power saving mode in an electronic device, the method comprising:
driving one or more processors;
detecting a command for switching to a power saving mode; and
when the command for switching to the power saving mode is detected, limiting operations of the one or more processors to block set functions other than a power saving call function in accordance with at least one of set power saving schemes.

2. The method of claim 1, further comprising, when the command for switching to the power saving mode is an emergency message received from the outside:
extracting one or more pieces of disaster-related information by parsing the emergency message; and
switching to an emergency mode based on the extracted disaster-related information.

3. The method of claim 1, further comprising, when the command for switching to the power saving mode is detected, displaying a screen configured using at least one of a control of brightness of a screen of a display unit, switching of the screen of the display unit to a gray mode, switching of a home screen of the display unit to a home screen of a minimum function, and deactivation of other applications except for a set necessary application.

4. The method of claim 3, wherein the set necessary application includes at least one of a phone call application, a message application, and a web browser application.

5. The method of claim 1, wherein the one or more processors include at least one of a call processor and an application processor.

6. The method of claim 1, wherein the command for switching to the power saving mode is one of a request for switching a mode by a user and a reception of an emergency message from a Cell Broadcast message Service (CBS) server or an Earthquake and Tsunami Warning Service (ETWS) server through a mobile communication protocol.

7. The method of claim 1, further comprising, when said at least one of the set power saving schemes is a network limiting scheme for limiting transmission of information based on a network, fixing a network function (NAT) by the call processor in order to increase a sleep period of a modem or blocking transmission of network information received from the network to the application processor by the call processor when the screen is turned off.

8. The method of claim 1, further comprising, when said at least one of the set power saving schemes is a network limiting scheme for limiting transmission of information based on a network:
deleting a route table to block mobile data transmission/reception between the application processor and the call processor when the screen is turned off; and
when the turned off screen is turned on, reconstructing the route table.

9. The method of claim 1, further comprising, when said at least one of the set power saving schemes is a process limiting scheme for limiting the use of a background in a screen off state:
pending a process in the application processor when the screen is turned off; and
when the turned off screen is turned on, performing the process which is pended when the screen is turned off.

10. An electronic device for performing a power saving mode, the electronic device comprising:
a display unit that displays a power saving screen when a command for switching to a power saving mode is detected, the display unit being functionally connected to the electronic device; and
a control unit comprising a call processor that controls a power saving call-related function and an application processor that controls other functions except for the power saving call-related function,
wherein the control unit makes a control to limit an operation of at least one of the call processor and the application processor to block at least some of the functions except for the power saving call-related function in accordance with at least one of set power saving schemes when the command for switching to the power saving mode is detected.

11. The electronic device of claim 10, wherein, when the command for switching to the power saving mode is an emergency message received from the outside, the control unit makes a control to parse the emergency message to extract one or more pieces of disaster-related information and to switch to an emergency mode based on the extracted disaster-related information.

12. The electronic device of claim 11, wherein the set necessary application includes at least one of a phone call application, a message application, and a web browser application.

13. The electronic device of claim 10, wherein the power saving screen is configured using at least one of a control of brightness of a screen of a display unit, switching of the screen of the display unit to a gray mode, switching of a home screen of the display unit to a home screen of a minimum function, and deactivation of another application except for a set necessary application.

14. The electronic device of claim 10, wherein the command for switching to the power saving mode is one of a request for switching a mode by a user and a reception of an emergency message from a Cell Broadcast message Service (CBS) server or an Earthquake and Tsunami Warning Service (ETWS) server through a mobile communication protocol.

15. The electronic device of claim 10, wherein, when said at least one of the set power saving schemes is a network limiting scheme for limiting transmission of information based on a network, the call processor performs at least one of an operation of fixing a network function (NAT) in order to increase a sleep period of a modem when the screen is turned off, an operation of filtering the network information received from the network to prevent the network information from being transmitted to the application processor when the screen is turned off, and an operation of, when a route table is deleted to block mobile data transmission/reception between the application processor and the call processor when the screen is turned off and then the turned off screen is turned on, reconstructing the route table.
